# EUROPÄISCHE PATENTSCHRIFT

(11) **EP 1 492 672 B1**
(45) Veröffentlichungstag und Bekanntmachung des Hinweises auf die Patenterteilung: **22.09.2010**
(21) Anmeldenummer: 03720394.0
(22) Anmeldetag: 29.03.2003
(51) Int. Cl.: B32B 37/24, B32B 15/14

(54) **VORRICHTUNG UND VERFAHREN ZUR HERSTELLUNG VON VERBUNDWERKSTOFFEN**
DEVICE AND METHOD FOR THE PRODUCTION OF COMPOSITE MATERIALS
DISPOSITIF ET PROCEDE DE PRODUCTION DE MATERIAUX COMPOSITES

(30) Priorität: 29.03.2002 DE 10214010
(43) Veröffentlichungstag der Anmeldung: 05.01.2005
(73) Patentinhaber: Lamera AB, 41292 Göteborg (SE)
(72) Erfinder: KARLSSON, Jerry, S-461 54 Trollhättan (SE); PLANCK, Heinrich, 72622 Nürtingen (DE); STEGMAIER, Thomas, 73277 Owen (DE); FINCKH, Hermann, 72649 Wolfschlugen (DE)
(74) Vertreter: Heun, Thomas
(86) Internationale Anmeldenummer: PCT/EP2003/003303
(87) Internationale Veröffentlichungsnummer: WO 2003/082573

(56) Entgegenhaltungen:
- WO-A-98/01295
- US-A- 3 684 637
- US-A- 4 034 134
- US-A- 5 030 488

## Beschreibung

Die Erfindung betrifft eine Vorrichtung und ein Verfahren zur Herstellung von (Kern-) Verbundwerkstoffen oder Verbundstrukturen (Sandwichstrukturen) aus mindestens einer ersten und mindestens einer zweiten Deckschicht, zwischen denen sich eine Kernschicht (Mittelschicht) befindet, die eine Zusammensetzung aus Fasern, wie insbesondere kurzgeschnittenen Fasern (Flockfasern, Flockmaterial), und Klebstoff aufweist.

Die Deckschichten und die Fasern können dabei jeweils aus Stahl, Aluminium oder anderen metallischen Materialien, auch Legierungen, oder aus nichtmetallischen Materialien wie Kunststoffen (zum Beispiel Nylon), Keramik, Textilien oder Pappe oder daraus zusammengesetzten Stoffen oder Mischungen solcher Stoffen bestehen, wobei weder die Deckschichten, noch die Fasern aus dem gleichen Material hergestellt sein müssen. Je nach Anwendungszweck können fast beliebige Materialkombinationen gewählt werden.

Beispielhafte Materialien für die Deckschichten und die Kernschicht sind in der EP 1 059 160 genannt, die durch Bezugnahme zum Bestandteil dieser Offenbarung gemacht werden soll.

Mit Verbundwerkstoffen der genannten Art lassen sich zahlreiche Vorteile gegenüber massiven Werkstoffen mit gleichen Abmessungen erzielen. In Abhängigkeit von der Art, Form, Dichte, Dicke, Länge und Ausrichtung der Fasern ist zum Beispiel ein besonders geringes Gewicht, eine hohe Biegesteifigkeit oder eine besonders gute Formbarkeit bzw. Flexibilität sowie eine hohe mechanische und akustische Energieabsorption erzielbar, wobei die Strukturen außerdem eine unempfindliche und korrosionsbeständige Oberfläche aufweisen können. Alle diese Eigenschaften können entsprechend der vorgesehenen Verarbeitung (wie Biegen, Tiefziehen, Schweißen, Schneiden usw.) sowie der Anwendung des Verbundmaterials gezielt optimiert werden.

Aus der WO 98/01295 sind zum Beispiel Sandwichstrukturen bekannt, die zwischen mindestens zwei Platten metallische Fasern aufweisen. Damit soll in erster Linie eine höhere Temperaturfestigkeit erzielt werden als mit solchen Strukturen, die Fasern aus organischen Stoffen enthalten. Die Herstellung, die auch in der EP 0 333 685 beschrieben wird, erfolgt dabei in der Weise, dass die Platten mit einem Klebstoff beschichtet und anschließend die metallischen Fasern durch Beschleunigung in einem elektrostatischen Feld auf mindestens eine der Klebstoffschichten aufgebracht werden (elektrostatischer Flockungsprozess), so dass sie durch den Klebstoff im wesentlichen senkrecht zu der Platte fixiert werden. Anschließend werden die Platten aneinandergepresst und der Klebstoff ausgehärtet.

Weiterhin ist aus der DE 41 31 394 ein Schalldämmaterial bekannt, das aus zwei äußeren Schichten gebildet ist, zwischen denen sich eine Kernschicht mit einem mit einem Bindemittel vorbenetzten Füllmaterial befindet, wobei die drei Schichten bei der Herstellung des Schalldämmaterials kontinuierlich verpresst werden.

In der DE 36 21 599 wird ein Verfahren und eine Vorrichtung zum Verteilen von kurzem Fasermaterial auf einer sich waagerecht bewegenden Bahn beschrieben, wobei ein Trichter mit einer Kammer vorgesehen ist, die eine Abgabeöffnung aufweist, aus der das Fasermaterial durch ein Maschensieb hindurch auf die sich bewegende Bahn abgegeben wird und wobei das Maschensieb seitlich schwingend bewegt wird. Damit soll eine möglichst gleichmäßige Verteilung des Fasermaterials über die gesamte Breite der Bahn erzielt werden.

Weiterhin wird in der EP 0 014 973 ein Verfahren zur Herstellung eines Formteils beschrieben. Dabei wird eine PVC-Folienbahn in einer ersten Station mit einem flüssigen Klebstoff beschichtet, und in einer zweiten Station werden mittels eines elektrostatischen Feldes Flockfasern auf die Klebstoffschicht aufgebracht. Anschließend wird der Klebstoff mit einer Heizeinrichtung vorgetrocknet, so dass die Flockfasern in Form einer Schicht in dem Klebstoff haften bleiben und die Folienbahn mit einem Trägerteil verpresst und verformt werden kann.

In der DE 38 24 842 ist schließlich eine wärmeisolierende Bauplatte und ein Verfahren zu ihrer Herstellung offenbart, bei dem in einem kontinuierlichen Prozess zwischen zwei profilierte Bleche eine innere Schicht mit Lamellen eines mit einem Bindemittel versetzten wärmeisolierenden Füllstoffes eingebracht und diese drei Schichten mit einem zwischen die Schichten eingespritzten Klebstoff zu einer Sandwichstruktur verklebt werden.

In der US 3,684,637 wird ein imitiertes Leder-Laminat und eine Verfahren zu dessen Herstellung beschrieben, bei dem Trägermaterialen mittels Antriebsrollen an Einrichtungen zum Aufbringen von Klebstoff, Fasern und Harzmaterial auf die Trägermaterialien vorbeigeführt werden.

Aus der US 5,030,488 sind verschiedene Laminate sowie Mittel zum Verbinden von Laminaten offenbart, um diese zu größeren Platten zusammenzufügen oder zu reparieren. Die Laminate sind durch zwei metallische Deckschichten mit einer dazwischen liegenden polymeren Kernschicht gebildet. Während der Herstellung dieser Laminate werden zwischen die metallischen Deckschichten vorzugsweise Abstandhalter entlang der Kanten der Laminate eingesetzt, die die Dicke der Kernschicht bestimmen und verhindern, dass das noch flüssige Material der Kernschicht vor seiner Härtung austritt

Alle diese Verfahren und Vorrichtungen haben jedoch im wesentlichen den Nachteil, dass sie entweder nur zur Herstellung ganz bestimmter Elemente vorgesehen und somit nicht universell anwendbar sind, oder nicht für einen kontinuierlichen Durchlaufprozess geeignet sind, mit dem eine hohe Stückzahl von Sandwichstrukturen pro Zeiteinheit hergestellt werden kann.

Der Erfindung liegt deshalb die Aufgabe zugrunde, eine Vorrichtung anzugeben, mit der Verbundwerkstoffe und -strukturen der eingangs genannten Art mit nahezu beliebiger Form kostengünstig und mit hoher Qualität in einem kontinuierlichen Durchlaufprozess gefertigt werden können.

Der Erfindung liegt auch die Aufgabe zugrunde, ein Verfahren - insbesondere unter Anwendung einer solcher Vorrichtung - anzugeben, mit dem Verbundwerkstoffe und -strukturen der eingangs genannten Art kostengünstig und mit hoher Qualität in einem kontinuierlichen Durchlaufprozess gefertigt werden können.

Die Aufgaben werden erfindungsgemäß mit einer Vorrichtung gemäß Anspruch 1 oder Anspruch 2 bzw. mit einem Verfahren gemäß Anspruch 8 oder Anspruch 9 gelöst.

Ein wesentlicher Vorteil dieser erfindungsgemäßen Lösungen besteht darin, dass mit der Vorrichtung bzw. dem Verfahren Verbundwerkstoffe und Verbundstrukturen mit unterschiedlichsten Eigenschaften und Abmessungen herstellbar sind, ohne die Vorrichtung oder das Verfahren wesentlich verändern zu müssen. Die hergestellten Verbundwerkstoffe und Verbundstrukturen können wiederum als Ausgangsmaterial zur Herstellung von nahezu beliebigen Gegenständen dienen, so dass eine hohe Flexibilität und erhebliche Kostenvorteile im Vergleich zur Anwendung von bekannten Vorrichtungen und Verfahren erzielt werden können.

Weiterhin können mit der erfindungsgemäßen Vorrichtung und dem erfindungsgemäßen Verfahren Verbundwerkstoffe und -strukturen mit neuen Eigenschaften und für neue Anwendungen hergestellt werden.

Die Anwendungen betreffen dabei insbesondere die Bereiche Fahrzeugtechnik (Automobil- und Motorradtechnik), Flugzeug- und Schiffbau, jeweils auch im Schutzbereich (zum Beispiel zur Panzerung oder Einkapselung von Maschinen mit schnell drehenden Teilen), sowie die Herstellung von Gehäusen, Behältern, Containern, Verpackungen und sogar Möbeln, wobei die Verbundwerkstoffe und -strukturen flächig oder gewölbt - zum Beispiel auch dreidimensionale Formelemente - sein können.

Die Unteransprüche haben vorteilhafte Ausgestaltungen einzelner Komponenten der Vorrichtung bzw. einzelner Verfahrensschritte zum Inhalt, mit denen eine gezielte Veränderung einzelner Herstellungsparameter möglich ist, so dass in relativ einfacher Weise Verbundwerkstoffe und -strukturen mit gewünschten physikalischen Eigenschaften zum Beispiel im Hinblick auf ihr Gewicht, ihre Biegesteifigkeit, ihre Formbarkeit bzw. Flexibilität, ihre mechanische und akustische Energieabsorption, ihre elektrische und thermische Leitfähigkeit usw. sowie ihre Verarbeitbarkeit erzielt werden können.

Weitere Einzelheiten, Merkmale und Vorteile der Erfindung ergeben sich aus der folgenden Beschreibung von bevorzugten und vorteilhaften Ausführungsfomen anhand der Zeichnung. Es zeigt:
- Fig. 1: eine schematische Prinzipdarstellung einer ersten Ausführungsform einer erfindungsgemäßen Vorrichtung zur Herstellung von Verbundplatten;
- Fig. 2: einen Querschnitt durch eine mit der Vorrichtung gemäß Figur 1 herge- stellte erste Verbundplatte;
- Fig. 3a: einen Querschnitt durch eine vorteilhafte erste Einrichtung zum Aufbrin- gen eines Klebstoffs auf eine Deckschicht als Teil einer erfindungsgemä- ßen Vorrichtung;
- Fig. 3b: eine dreidimensionale Darstellung der ersten Einrichtung gemäß Figur 3a;
- Fig. 3c: eine dreidimensionale Darstellung einer vorteilhaften zweiten Einrichtung zum Aufbringen eines Klebstoffs auf eine Deckschicht als Teil einer erfin- dungsgemäßen Vorrichtung;
- Fig. 3d: eine dreidimensionale Darstellung einer vorteilhaften dritten Einrichtung zum Aufbringen eines Klebstoffs auf eine Deckschicht als Teil einer erfin- dungsgemäßen Vorrichtung; und
- Fig. 4: einen Querschnitt durch eine gemäß einer vorteilhaften Ausführungsform des erfindungsgemäßen Verfahrens hergestellte zweite Verbundplatte.

Die erfindungsgemäße Vorrichtung soll im folgenden anhand einer Ausführungsform zur kontinuierlichen Herstellung von Verbundplatten aus zwei Deckschichten in Form von Metallfolien, zwischen die eine Kernschicht mit Flockfasern eingebracht wird, erläutert werden. Wenn anstelle einer oder beider Metallfolien eine oder mehrere solche Verbundplatten verwendet werden, kann damit auch eine mehrfache Verbundstruktur hergestellt werden.

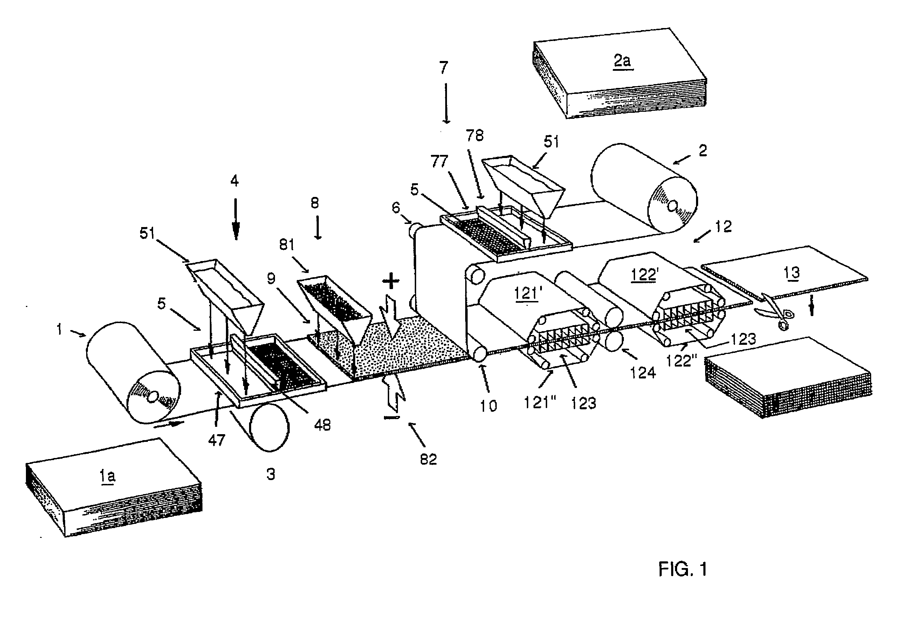

Figur 1 zeigt schematisch eine solche Vorrichtung. Eine erste und eine zweite Metallfolie 1, 2, die jeweils eine Dicke von zum Beispiel etwa 0,2 mm aufweisen, werden in jeweils aufgewickelter Form in die Vorrichtung eingebracht. Alternativ dazu ist es auch möglich, eine Metallfolie mit im wesentlichen doppelter Breite einzubringen, in Längsrichtung (Förderrichtung) zu teilen und diese Teile dann als erste und zweite Metallfolie entsprechend der folgenden Beschreibung zuzuführen.

Als weitere Alternative können anstelle der aufgewickelten Metallfolien 1, 2 bereits zugeschnittene Bögen 1a; 2a (gegebenenfalls mit bzw. auf einem gesonderten Transportband) durch die Vorrichtung geführt werden. Denkbar ist dabei auch die Kombination einer Zuführung von aufgewickelter Metallfolie und einzelnen zugeschnittenen Bögen der Metallfolie. Somit könnte zum Beispiel die in Figur 1 dargestellte Metallfolie 2 durch zugeschnittene Bögen 2a oder die Metallfolie 1 durch zugeschnittene Bögen 1a ersetzt werden. Die folgenden Erläuterungen gelten für alle diese Alternativen, wobei stellvertretend der Begriff Metallfolie verwendet wird. Dies gilt auch dann, wenn anstelle einer Metallfolie eine Folie bzw. Deckschicht aus einem anderen Material, wie sie beispielhaft eingangs erwähnt sind, verwendet wird.

Die erste Metallfolie 1 wird zunächst mittels einer ersten Rolle 3 an einer ersten Einrichtung 4 vorbeigeführt, mit der ein Klebstoff 5 auf die erste Metallfolie 1 aufgebracht wird. In ähnlicher Weise wird die zweite Metallfolie 2 über eine zweite Rolle 6 geführt und läuft dabei an einer zweiten Einrichtung 7 vorbei, mit der ein Klebstoff 5 auf die zweite Metallfolie 2 aufgetragen wird. Gegebenenfalls müssen die Metallfolien 1, 2 vor dem Auftragen des Klebstoffs 5 in üblicher Weise zum Beispiel durch Anätzen und / oder Aufrauhen vorbehandelt oder zur Oberflächenaktivierung einer Coronabehandlung unterzogen und gereinigt werden (nicht dargestellt).

Anschließend wird die mit Klebstoff 5 beschichtete erste Metallfolie 1 durch eine Beflockungseinrichtung 8 geführt, die vorzugsweise gekapselt und klimatisiert ist (Kapselung und Klimatisierung nicht dargestellt) und mit der das aus einzelnen Fasern 9 mit einer Dicke von zum Beispiel etwa 5 bis etwa 40 µm, insbesondere etwa 22 µm, und einer Länge von zwischen etwa 0,1 und etwa 20 mm, insbesondere zwischen etwa 1 und etwa 5 mm bestehende Flockmaterial auf die mit Klebstoff 5 beschichtete Fläche der ersten Metallfolie 1 aufgebracht wird, und zwar in der Weise, dass die Fasern 9 möglichst einzeln und mit einer gewünschten Ausrichtung relativ zu der ersten Metallfolie 1, im allgemeinen senkrecht zu dieser, in der Klebstoffschicht fixiert werden. Dieser Vorgang wird auch als Flockungsprozess bezeichnet.

Die beiden Metallfolien 1, 2 werden anschließend an einer dritten Rolle 10 zusammengeführt und dann in einen Trockner 12 geleitet. Bei der in Figur 1 gezeigten Ausführungsform weist der Trockner 12 an seinem Eingang ein erstes oberes Förderband 121' und ein zweites unteres Förderband 121" und an seinem Ausgang ein drittes oberes Förderband 122' und ein viertes unteres Förderband 122" auf. Die Förderbänder 121', 121", 122', 122" werden mit einer Antriebseinrichtung (nicht dargestellt) angetrieben, wobei das erste und dritte Förderband 121', 122' auf den Verbundwerkstoff von oben und das zweite und vierte Förderband 121", 122" auf den Verbundwerkstoff von unten fördernd einwirkt.

Im Bereich der Einwirkung der Förderbänder 121', 121"; 122', 122" befindet sich gegenüber der ersten und zweiten Metallfolie 1, 2 jeweils eine Heiz- oder Kühleinrichtung mit kontinuierlichem Presswerk 123. Die beiden Metallfolien 1, 2 werden mittels der Förderbänder 121', 121"; 122', 122" durch die beiden Preßwerke 123 geführt. Mit den Presswerken 123 werden die Metallfolien 1,2 - je nach Art des verwendeten Klebstoffs 5 - gegebenenfalls aufgeheizt und gleichzeitig aneinandergepresst, so dass der Klebstoff 5 aushärtet und eine sichere Verbindung zwischen den beiden Metallfolien 1, 2 und den Fasern 9 erzielt wird. Anschließend werden die Metallfolien 1, 2 in definierter Weise wieder auf Umgebungstemperatur abgekühlt, um ein Verziehen zu vermeiden.

Zwischen den beiden Förderbandpaaren 121', 121" und 122', 122" befindet sich eine Kalibriereinrichtung 124, mit der die Metallfolien 1, 2 zwischen zwei Rollen, die ebenfalls angetrieben sein können, mit einem gewünschten Abstand zusammengedrückt und verpresst werden. Eine solche (weitere) Kalibriereinrichtung kann sich zusätzlich oder alternativ auch zwischen der dritten Rolle 10 und dem ersten Förderbandpaar 121', 121" befinden.

Am Ausgang des Trockners 12 ist schließlich eine Schneideinrichtung 13 angeordnet, mit der die verpressten Metallfolien 1, 2 in gewünschter Weise zugeschnitten werden.

Zur Förderung der ersten und zweiten Metallfolie 1, 2 durch die Vorrichtung kann eine weitere Antriebseinrichtung (nicht dargestellt) vorgesehen sein, mit der die erste und die zweite Rolle 3, 6 in Drehungen versetzt werden.

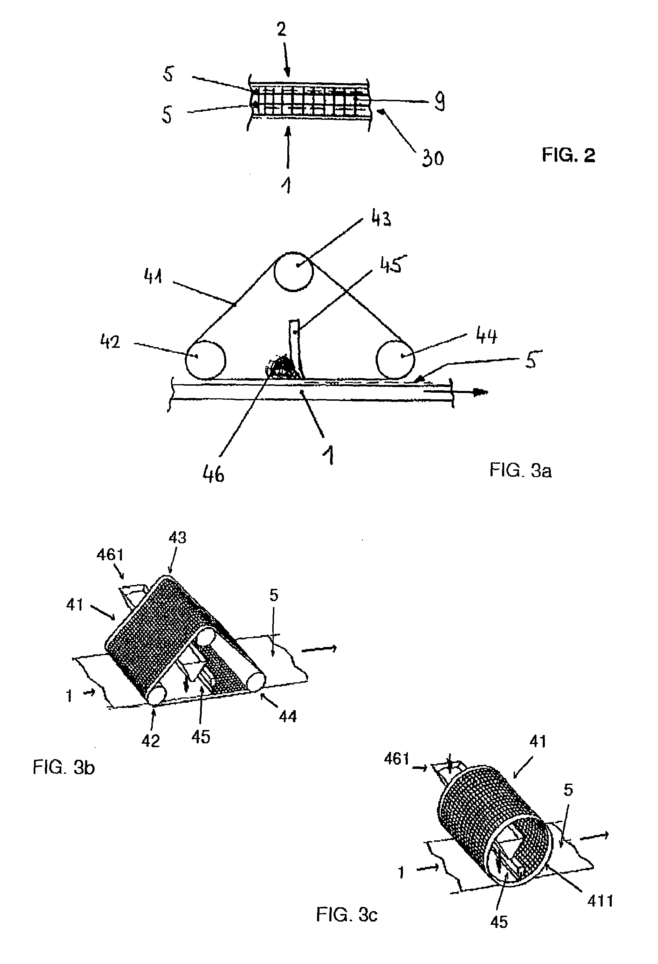

Figur 2 zeigt einen Querschnitt durch eine mit der Vorrichtung hergestellte erste Verbundplatte, in der die erste und die zweite Metallfolie 1, 2, sowie die dazwischen liegende Kernschicht 30 mit im wesentlichen senkrecht stehenden Fasern 9, sowie die beiden Schichten aus Klebstoff 5 zu erkennen sind.

Im folgenden sollen nun einzelne Komponenten der Vorrichtung gemäß Figur 1 im Detail beschrieben werden.

Die beiden Einrichtungen 4, 7 zum Aufbringen des Klebstoffs 5 auf die Metallfolien 1, 2 können in verschiedener Weise ausgestaltet sein und nach verschiedenen Verfahren arbeiten. Die Auswahl des Verfahrens ist insbesondere von der Art und Konsistenz des Klebstoffs 5, der Oberfläche der Metallfolien 1, 2 sowie davon abhängig, ob die gesamte Fläche oder nur bestimmte Bereiche mit Klebstoff 5 beschichtet werden sollen. Je nach Art des Klebstoffs 5 sind die erste und die zweite Rolle 3, 6, deren Umgebung und / oder die Metallfolien 1, 2 in diesem Bereich sowie im Bereich der Beflockungseinrichtung 8 gegebenenfalls auch beheizbar (zum Beispiel mit einem Luftstrom, durch Infrarot- oder UV-Strahlung oder auf induktivem Wege usw.), um ein zu frühes Abkühlen des Klebstoffs 5 zu verhindern und dessen Auftrag zu erleichtern bzw. diesen in einem solchen Maße flüssig zu halten, dass die Fasern 9 während der anschließenden Beflockung sicher in diesen eindringen können. Bei entsprechend dünnflüssigem Klebstoff 5 könnte dieser durch die Erwärmung auch teilweise angehärtet werden, um die Fasern 9 sicher fixieren zu können.

Bei einem dem Siebdruck ähnlichen Verfahren wird der jeweils in einem Behälter 51 bevorratete Klebstoff 5 auf einem Sieb 47, 77 verteilt, das auf den zu beschichtenden Metallfolien 1, 2 angeordnet wird. Anschließend wird der Klebstoff 5 mit einer Streichrakel 48, 78 durch das Sieb 47, 77 auf die Metallfolie 1, 2 gedrückt, wie es von den Siebdruckverfahren bekannt ist, wobei durch die Stellung, das Material, den Druck und die Form der Rakel 48, 78 die Menge des aufgebrachten Klebstoffs 5 beeinflusst werden kann. Mit diesem Verfahren kann eine besonders gleichmäßige Verteilung auch bei nicht ganz ebener Oberfläche der Metallfolien 1,2 erzielt werden.

Dabei kann es insbesondere zur Erzielung einer gleichmäßigen Klebstoff-Schichtdicke vorteilhaft sein, über dem Sieb 47, 77 eine Heizeinrichtung anzuordnen und den Klebstoff 5 und / oder das Sieb 47, 77 zu erwärmen, um durch eine entsprechende Temperaturerhöhung die Viskosität des Klebstoffs 5 herabzusetzen und seine Fließfähigkeit zu verbessern.

Zur Verbesserung der Ablösung des Klebstoffs 5 von dem Sieb 47, 77 kann dieses auch mit einer entsprechenden Antihaft-Beschichtung und / oder einer die Ablösung erleichternden Oberflächenstruktur versehen sein.

Der Klebstoff 5 kann auch in mehreren Schichten übereinander aufgebracht werden. Dies kann zum einen dazu dienen, eine bestimmte Schichtdicke zu erzielen, und zwar insbesondere dann, wenn eine zweite Schicht mit einem verminderten Druck auf die erste Schicht aufgetragen wird. Zum anderen kann mit einem zweiten Beschichtungsvorgang auch ein Vervollständigen und Schließen der ersten Schicht herbeigeführt werden, insbesondere wenn mit dem ersten Siebdruckvorgang nicht an allen Stellen (genügend) Klebstoff aufgebracht werden konnte. Diese Beschichtungsvorgänge können auch mehrfach und mit unterschiedlichem Druck wiederholt werden.

Weiterhin kann es vorteilhaft sein, über eine aufgebrachte Klebstoffschicht einen Warmluftstrom zu führen. Es hat sich nämlich überraschend gezeigt, dass damit Bläschen, die sich in der Klebstoffschicht befinden, beseitigt werden können und die Oberfläche der Klebstoffschicht besonders eben wird.

Eine weitere Alternative, bei der auch das vom Siebdruck bekannte Prinzip angewandt wird, ist in den Figuren 3a bis 3c schematisch dargestellt. In diesen Darstellungen wird beispielhaft davon ausgegangen, dass der Klebstoff 5 auf die erste Metallfolie 1 aufgebracht wird. Mit einer gleichen Anordnung kann natürlich auch die zweite Metallfolie 2 oder eine weitere bzw. andere Deckschicht mit Klebstoff 5 beschichtet werden.

Gemäß den Figuren 3a und 3b wird ein flexibles und für den Klebstoff 5 teildurchlässiges Band, zum Beispiel ein Textilband 41, mittels dreier Rollen 42, 43, 44 geführt und auf die zu beschichtende Metallfolie 1 gerückt. Das Textilband 41 wird dabei im allgemeinen durch die geförderte Metallfolie 1 mitgenommen, so dass ein eigener Antrieb gegebenenfalls nicht erforderlich ist. Auf der der Metallfolie 1 gegenüberliegenden Seite des Textilbandes 41 befindet sich eine stationäre Rakel 45, die einen in Bewegungsrichtung des Textilbandes 41 vor ihr liegenden Klebstoffvorrat 46, der aus einem Trichter 461 zugeführt wird, durch das Textilband 41 auf die Metallfolie 1 drückt. Der Klebstoffauftrag kann wiederum im wesentlichen durch die Stellung, das Material, den Druck und die Form der Rakel beeinflußt werden.

Der mit dem Textilband 41 mitgeführte Klebstoff 5 wird vorzugsweise durch ein Abstreifelement (nicht dargestellt) im Bereich der Rolle 44 abgenommen. Mindestens eine der Rollen 42, 43, 44 ist vorzugsweise verschiebbar gelagert, so dass die Spannung des Textilbandes 41 einstellbar ist.

Figur 3c zeigt eine Ausführungsform, bei der das Textilband 41 auf eine Trommel 411 aufgespannt ist, innerhalb der der Trichter 461 für den Klebstoff sowie die Rakel 45 angeordnet ist. Alternativ dazu kann auch ein Sieb in Form einer für den Klebstoff 5 durchlässigen Trommel ausgebildet sein (Rotationssiebdrucktechnik), in der sich die Rakel befindet und in die der Klebstoff 5 eingebracht wird, so dass dieser beim Abrollen der Trommel auf der Metallfolie 1, 2 durch die Wand der Trommel auf die Metallfolie 1, 2 gelangt. Die Ablösung des Klebstoffs kann zusätzlich zu den oben beschriebenen Maßnahmen durch Vergrößerung des Trommeldurchmessers verbessert werden.

Mit diesen Vorrichtungen bzw. Verfahren ist es auch möglich, mit einem nur in bestimmten Bereichen durchlässigen Sieb bzw. Textilband 41 den Klebstoff 5 nur an bestimmten Stellen oder in Form bestimmter Muster auf die Metallfolien 1, 2 aufzubringen. Die Erzeugung dieser Muster auf dem Sieb bzw. dem Textilband 41 ist von den üblichen Siebdruckverfahren bekannt.

Solche Muster können zum Beispiel eine Wabenstruktur haben, die sich aus einer Anzahl von Vielecken (Dreieck, Fünfeck, Sechseck, Achteck) zusammensetzt. Weiterhin können Klebstoffmuster in Form von Spiralen, Schlangenlinien, Rechtecken, Kreisen, Punkten, Kreislinien, Ellipsen, Sternen, Kreuzen, sowie anderen geometrischen Formen und beliebigen Kombinationen davon erzeugt werden.

Die Wahl eines solchen Musters kann nicht nur zur Einsparung von Klebstoff 5 und Fasermaterial, sondern auch in Abhängigkeit von der späteren Anwendung der Verbundplatte vorgenommen werden. Wenn die Verbundplatten zum Beispiel verschweißt oder geschnitten werden sollen, so werden die Metallfolien 1, 2 an den späteren Schweißpunkten oder Schweißnähten oder Schnittlinien nicht mit Klebstoff 5 beschichtet, um eine besonders saubere Schweißnaht bzw. Schneidkante zu erzielen, die frei von Klebstoff 5 und damit auch frei von Fasern 9 ist. Außerdem entstehen dann während des Schweißens keine Dämpfe aufgrund von verbrennendem Klebstoff. Wenn auch entlang von Knick- oder Faltkanten kein Klebstoff 5 aufgetragen wird, wird auch die spätere diesbezügliche Bearbeitung erleichtert.

Eine nur lokale Beschichtung mit Klebstoff 5 bietet sich ferner dann an, wenn gezielt lokal unterschiedliche (richtungsabhängige) mechanische, akustische, thermische, Absorptions-, Schwingungs- oder andere physikalische Eigenschaften des Verbundwerkstoffs (Gradientwerkstoffeigenschaften) erzielt werden sollen.

Bei einer großflächigen Beschichtung einer Metallfolie 1, 2 mit Klebstoff können bei unterschiedlichen thermischen Ausdehnungskoeffizienten beider Materialien Eigenspannungen entstehen. Diese können zumindest weitgehend vermieden werden, wenn der Klebstoff in einer nichtzusammenhängenden Schicht, die zum Beispiel aus einzelnen Klebstoffinseln (Punktmuster) gebildet ist, aufgebracht wird. Auch ein solches Klebstoffmuster lässt sich vorzugsweise mit dem vom Siebdruck bekannten Verfahren auftragen.

Damit läßt sich gleichzeitig ein weiteres Problem lösen. Es hat sich nämlich gezeigt, dass bei Anwendung der meisten zur Zeit bekannten Klebstoffe eine Erwärmung des Verbundwerkstoffs zu einer erheblichen Herabsetzung der Delaminationsfestigkeit führt. Wenn der Klebstoff jedoch nicht in einer zusammenhängenden Schicht, sondern in Form einer Mehrzahl von Klebstoffinseln aufgebracht wird, bleibt diese Delaminationsfestigkeit auch bei erhöhter Temperatur wesentlich höher. Schließlich ist es auch möglich, zwischen den Metallfolien 1, 2 bestimmte Bereiche als Hohlräume oder Kanäle von Klebstoff frei zu halten, durch die später zum Beispiel ein flüssiges oder gasförmiges Medium geführt oder in die vor dem Zusammenfügen der beiden Metallfolien 1, 2 Gegenstände eingelagert oder nach dem Zusammenfügen von einem der Ränder Gegenstände eingeschoben werden.

Alternativ zu dem Siebdruck-Auftrag ist insbesondere ein solcher selektiver Klebstoff-Auftrag auch mit einem Sprühsystem zu erzielen, wenn dieses eine Mehrzahl von einzeln ansteuerbaren Sprühdüsen aufweist, die zur Erzielung oder Aufrechterhaltung einer ausreichend niedrigen Klebstoffviskosität vorzugsweise beheizbar sind. Ein solches Sprühsystem ist vorzugsweise rechnergesteuert, so dass auf relativ einfache Weise nahezu beliebige Klebstoffmuster auf den Metallfolien 1, 2 erzeugt werden können.

Vorteilhaft kann auch die Anwendung einer ggf. beheizbaren Breitschlitzdüse sein, mit der eine erste Klebstoffschicht (Vorauftrag) oder die gesamte Klebstoffschicht (Vor- und Endauftrag) aufgebracht wird.

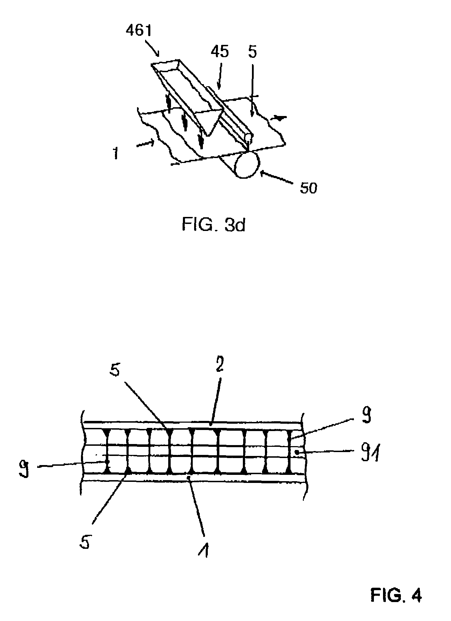

Eine weitere Möglichkeit besteht darin, den Klebstoff 5 gemäß Figur 3d aus dem Trichter 461 durch Rakeln direkt auf die Metallfolien 1, 2 aufzutragen. Zur Erzielung einer möglichst gleichmäßigen Klebstoffschicht wird die betreffende Metallfolie 1,2 im allgemeinen mit einer Walze 50 an der Rakel vorbeigeführt oder - im Falle eines diskontinuierlichen Verfahrens - auf einem Vakuum-Tisch fixiert. In ähnlicher Weise kann der Klebstoff 5 auch aufgerollt und dann mit einer Messerklinge o.ä. kalibriert werden, wobei in beiden Fällen nach dem Auftrag ein bestimmtes Klebstoffmuster auch mit einer kamm-ähnlichen Rakel eingebracht werden kann, die über die mit Klebstoff beschichtete Metallfolie 1, 2 gezogen wird.

Die Art des verwendeten Klebstoffs 5 wird im wesentlichen durch die Art des Aufbringens, die spätere Anwendung des Verbundwerkstoffs und insbesondere dessen gewünschte Eigenschaften wie Steifigkeit oder Flexibilität, Festigkeit usw., sowie die Art und Verteilung der Flockfasern bestimmt. Es kommen dabei im wesentlichen drei Klebstoffsorten in Betracht. Dies sind die sogenannten Reaktivkleber, bei denen es sich um bei normalen oder erhöhten Temperaturen aushärtende Kleber handelt, weiterhin Zwei-Komponenten-Kleber, sowie die bekannten Thermoplaste. Wenn zum Beispiel eine besonders hohe Steifigkeit des Materials gewünscht wird, bieten sich schaumähnliche bzw. aufschäumende Klebstoffe 5 an, die - bei konstant gehaltenem Abstand der Metallfolien 1, 2 - während des Aushärtens die Fasern 9 weitgehend umschließen und dadurch zu einer besonders festen und kompakten Verbindung zwischen den beiden Metallfolien 1,2 und den Fasern 9 führen.

Wenn hingegen eine gute mechanische oder akustische Energieabsorption und Verformbarkeit des Verbundwerkstoffs erzielt werden soll, bieten sich Klebstoffe 5 an, die auch in ausgehärtetem Zustand eine gewisse Flexibilität aufweisen. In diesem Fall können bekannte heißschmelzende Klebstoffe oder Epoxy-Klebstoffe verwendet werden.

Wenn der Verbundwerkstoff durch Umformprozesse wie zum Beispiel Tiefziehen bearbeitet werden soll, so sind bevorzugt Klebstoffe anzuwenden, deren Festigkeit auch in ausgehärtetem Zustand durch Erwärmung abnimmt. Der Verbundwerkstoff wird dann insgesamt flexibler und elastischer und kann ohne Schäden in größerem Maße verformt werden, wobei auch die dazu erforderlichen Kräfte geringer sind. Gegebenenfalls ist bei entsprechender Wahl des Klebstoffs und einer ausreichenden Erwärmung sogar eine manuelle Formung möglich.

Weiterhin besteht die Möglichkeit, den Klebstoff 5 in Form einer Klebstofffolie oder mehrerer Klebstofffolien-Abschnitte auf die Metallfolien 1, 2 aufzubringen, wobei in die Klebstofffolie auch Muster mit beliebiger Form (zum Beispiel durch Ausstanzen) eingebracht werden können. Die Adhäsion auf den Metallfolien 1, 2 kann zum Beispiel über eine elektrostatische Aufladung erreicht werden. Die Dicke der Folie entspricht dabei entweder der Dicke der gewünschten Klebstoffschicht, oder es wird eine Klebstofffolie mit größerer Dicke entsprechend gestreckt und ausgewalzt. Damit können gleichzeitig auch Lufteinschlüsse vermieden bzw. beseitigt werden. Durch Erwärmen der Klebstoffschicht und/oder der Metallfolien 1, 2 während des nachfolgenden Beflockungsvorgangs wird dann sichergestellt, dass die Fasern in ausreichendem Maße in die Klebstoffschicht eindringen können und dort fixiert werden.

In bestimmten Fällen kann es sinnvoll sein, ganz oder teilweise auf ein Beschichten einer oder beider Metallfolien 1, 2 in der Vorrichtung zu verzichten und statt dessen mindestens eine Metallfolie zuzuführen, die bereits mit einer Klebstoffschicht beschichtet ist. In diesem Fall ist die Klebstoffschicht vorzugsweise mit einer nicht klebenden Schutzfolie abgedeckt, so dass die betreffende Metallfolie zu einer Rolle aufgerollt werden kann. Vor oder zu Beginn des Zuführens zu der Vorrichtung wird die Schutzfolie manuell oder automatisch (nicht dargestellt) abgezogen.

Schließlich ist es auch möglich, die erste Metallfolie 1 in der oben beschriebenen Weise mit einem viskosen Klebstoff 5 zu beschichten, nach dem Beflocken eine Klebstofffolie auf die Fasern 9 aufzulegen und dann die zweite Metallfolie 2 ggf. nach Erwärmen damit zu verpressen.

Die oben beschriebenen Maßnahmen können zur Optimierung des Klebstoffauftrags auch miteinander kombiniert werden.

Nach der Beschichtung der Metallfolien 1, 2 mit Klebstoff 5 wird mit der Beflockungseinrichtung 8 der Flockungsprozess durchgeführt. Auch die Beflockungseinrichtung 8 kann nach verschiedenen Verfahren arbeiten, die in Abhängigkeit von der Art des Materials, aus dem die Fasern 9 bestehen, sowie der Dicke, der Länge und der gewünschten Dichte bzw. Verteilung der Fasern 9 auf der ersten Metallfolie 1 gewählt werden.

Ein weiteres Kriterium für die Auswahl des Verfahrens sind wiederum die gewünschten Eigenschaften des Verbundmaterials. Wenn eine möglichst hohe Flexibilität und Verformbarkeit gewünscht ist, sollten die Fasern 9 möglichst senkrecht zu der Oberfläche der Metallfolien 1, 2 fixiert werden. Wenn hingegen eine möglichst hohe Steifigkeit des Verbundmaterials angestrebt wird, sollten die Fasern 9 in stärkerem Maße ungeordnet und insbesondere schräg bzw. diagonal und einander überkreuzend angeordnet sein.

Mit einer Heizeinrichtung (Warmluftstrom, Infrarot- oder UV-Strahlung, induktive Erwärmung usw.) kann bei der Beflockung die Viskosität des Klebstoffs 5 herabgesetzt werden, um sicherzustellen, dass die Fasern 9 in ausreichendem Maße in die Klebstoffschicht eindringen können.

Die Ausgangssubstanz für den Flockungsprozess ist im allgemeinen ein Bündel von metallischen Drähten oder ein Bündel von Fasern aus einem der anderen, eingangs genannten Materialien, die zunächst auf eine gewünschte Länge zugeschnitten werden.

Die in Figur 1 gezeigte Ausführung der Beflockungseinrichtung 8 weist einen (oder mehrere) Behälter 81 auf, in die die zugeschnittenen Fasern 9 eingebracht werden und die jeweils mit einem für die Fasern 9 durchlässigen Boden versehen sind, durch den die Fasern 9 auf die erste Metallfolie 1 gelangen können. Der Behälter 81 einerseits und die Metallfolie 1 andererseits werden auf unterschiedliche elektrische und / oder magnetische Potentiale gelegt, so dass zwischen beiden ein elektrisches und / oder magnetisches Feld 82 entsteht. Zu diesem Zweck sind eine entsprechende Spannungsquelle sowie Mittel zum Erzeugen des elektrischen und / oder magnetischen Feldes (nicht dargestellt) vorgesehen. Die Feldstärke 82 und die Durchlässigkeit des Bodens des Behälters 81 sind so aufeinander abgestimmt, dass die Fasern 9 durch den Boden hindurchtreten, durch das elektrische und / oder magnetische Feld in Richtung auf die Metallfolie 1 beschleunigt werden und dann mit einem Ende in die Klebstoffschicht eindringen, so dass sie dort zum Beispiel im wesentlichen senkrecht zu der Metallfolie 1 stehen bleiben.

Zur Erzielung einer gewünschten Faserdichte in der Klebstoffschicht 5 kann insbesondere die Stärke des Feldes 82, der Abstand zwischen dem Behälter 81 und der Metallfolie 1 und die Geschwindigkeit, mit der die Metallfolie 1 bewegt wird, verändert werden. Weiterhin besteht die Möglichkeit, mindestens eine Vibrationseinrichtung (nicht dargestellt) vorzusehen, mit der der Behälter 81 zur Erhöhung bzw. Modulation der Menge von durch den betreffenden Boden hindurchtretenden Fasern 9 sowie zu deren Auflockerung einer vorzugsweise einstellbaren Vibrationsbewegung in horizontaler und / oder vertikaler Richtung ausgesetzt wird.

Ein weiterer Parameter, mit dem die Dichte und die Verteilung bzw. Homogenität der Fasern 9 beeinflusst werden kann, ist die Art des Bodens des Behälters 81. Dies betrifft insbesondere die Anzahl, die Größe, die Form und die Dichte der Öffnungen in dem betreffenden Boden, wobei zur Erzielung unterschiedlicher Abgabemengen von Fasern 9 auch entsprechende Blendeneinrichtungen vorgesehen sein können, mit denen zumindest einige der Öffnungen ganz oder teilweise geschlossen werden können.

Insbesondere dann, wenn der Boden des Behälters 81 als Sieb ausgebildet ist, können dessen Abgabeeigenschaften auch durch dessen Formung, Prägung und / oder Strukturierung beeinflusst werden. Ein solches Sieb ist vorzugsweise in Kombination mit einer Vibrationseinrichtung ("Schüttelsieb") anzuwenden, um die in den betreffenden Behälter 81 eingebrachten Fasern aufzulockern, voneinander zu lösen und zu vereinzeln, und dadurch zu verhindern, dass sich das Sieb an einzelnen Stellen mit Fasern mehr oder weniger stark zusetzt. Dabei kann es auch vorteilhaft sein, die Vibration des Siebes mit unterschiedlichen Frequenzen und / oder unterschiedlichen Amplituden durchzuführen, wobei alternativ oder zusätzlich auch akustische Druckwellen und / oder Druckluft eingesetzt werden können, um beispielsweise Faserklumpen in dem Sieb aufzulösen oder Fasern 9 mit unterschiedlicher Länge optimal sieben zu können.

Um die Klumpenbildung von Fasern 9 zu hemmen oder zu vermeiden, können diese auch mit einer geeigneten Beschichtung versehen werden. Eine solche Beschichtung kann auch eine Komponente eines Zwei-Komponenten-Klebstoffs sein, wobei die zweite Komponente gemäß obiger Beschreibung mit der ersten bzw. zweiten Einrichtung 4, 7 auf die zu beschichtende Metallfolie 1 bzw. 2 aufgebracht wird.

Weiterhin kann zwischen dem Behälter 81 und der Metallfolie 1 eine Elektrode (nicht dargestellt) zum Beispiel in Form eines Rings angeordnet werden, der gegenüber der Metallfolie 1 bzw. dem Behälter 81 auf ein solches Spannungspotential gelegt wird, dass dadurch die Fasern 9 nach dem Prinzip der Triodenröhre zusätzlich beschleunigt oder abgebremst werden.

Eine Steuerung der Menge der abgegebenen Fasern sowie der Richtung, mit der der Faserstrom auf die Metallfolie 1 gerichtet wird, kann auch unter Anwendung des von der Braunschen Röhre bekannten Funktionsprinzips erfolgen. Dabei können eine wie ein Wehneltzylinder ausgebildete Einrichtung sowie verschiedene zylindrische Elektroden zur Fokussierung und Beschleunigung eines entsprechenden Faserstroms dienen, der darüberhinaus mit elektrischen und / oder magnetischen Feldern durch entsprechende Ansteuerung der diese Felder erzeugenden Einrichtungen mit unterschiedlichen Richtungen auf die Metallfolie 1 gelenkt wird.

Durch Veränderung aller dieser Parameter während des Betriebes der Beflockungseinrichtung 8 können auf der Klebstoffschicht auch Bereiche mit unterschiedlichen Faserdichten bzw. Bereiche mit inhomogener Faserverteilung oder faserfreie Bereiche erzielt werden.

Delaminationsprüfungen haben gezeigt, dass (nachdem der Klebstoff 5 ausgehärtet worden ist) die Fasern 9 in der beflockten Klebstoffschicht der ersten Deckschicht (bei dem beschriebenen Verfahren die erste Metallfolie 1) stärker verankert sind, als in der Klebstoffschicht der zweiten Deckschicht (zweite Metallfolie 2), die auf die erste Deckschicht aufgebracht wurde. Um eine möglichst gleichmäßige Delaminationsfestigkeit und gleichmäßige Verteilung anderer physikalischer Eigenschaften auf beiden Deckschichten zu erzielen, können beide Deckschichten auch in der Weise mit einem Positiv-Negativmuster beflockt werden, dass nach ihrem Zusammenfügen die beflockten Bereiche in der Kernschicht jeweils nebeneinander liegen bzw. zahnartig ineinandergreifen.

In diesem Fall ist besonders vorteilhaft ein Verfahren anzuwenden, bei dem, wie eingangs bereits erläutert wurde, eine Metallfolie mit im wesentlichen doppelter Breite zugeführt wird, die nach dem Auftragen des Klebstoffs und dem Beflocken sowie gegebenenfalls einem Vorhärten des Klebstoffs in Längsrichtung geteilt wird, um anschließend die beiden Hälften aufeinander zu klappen, zu verpressen und endzuhärten.

Zur Erzielung des Positiv-Negativmusters können zur Beflockung jeweils Schablonen (nicht dargestellt) verwendet werden, mit denen auf einer Deckschicht ein Muster in Form von beflockten Bereichen erzeugt wird, das das Negativ (d. h. nicht beflockte Bereiche) des Musters auf der anderen Deckschicht darstellt, so dass diese sich beim Zusammenfügen der Deckschichten gegenseitig ergänzen.

Die Schablonen sind vorzugsweise in Form eines Bandes zum Beispiel aus einem Textil- oder einem Folienmaterial ausgebildet und werden jeweils nach Art eines Endlosbandes mit drei Führungsrollen mit gleicher Geschwindigkeit wie die zu beflockende Deckschicht geführt. Dies hat den Vorteil, dass überschüssige Fasern 9, die nicht durch die Öffnungen in der Schablone auf die betreffende Deckschicht gelangt sind, im Bereich einer der Führungsrollen mit einer Abstreif- oder Absaugvorrichtung entfernt werden können.

Alternativ dazu können die Fasern 9 auch durch entsprechend der jeweiligen Muster angeordnete Röhren hindurch, die einen gewünschten Querschnitt haben, aufgebracht werden, wobei die Röhren (nicht dargestellt) jeweils kurz oberhalb der Klebstoffschicht der jeweiligen Metallfolie 1, 2 enden und dort gegebenenfalls ein Sieb aufweisen, so dass sie im übrigen im wesentlichen die Funktion des Behälters 81 ausüben. Auch in diesem Fall können die Fasern 9 gemäß obiger Erläuterung mit elektrischen und / oder magnetischen Feldern beschleunigt bzw. beeinflusst werden.

Eine weitere Möglichkeit zur Erzielung einer bestimmten Dichteverteilung der Fasern 9 besteht darin, einen schäumenden Klebstoff 5 punktförmig auf verschiedene Stellen der ersten Metallfolie 1 aufzutragen, dann dort jeweils ein Faserbüschel aufzusetzen und den Klebstoff 5 vorzuhärten. Durch die dabei auftretende Aufschäumung werden die einzelnen Fasern 9 voneinander beabstandet und / oder in ihrer Richtung ähnlich einem Blumenstrauss aufgefächert, so dass örtlich Bereiche mit relativ gleichmäßiger Faserdichte entstehen, wobei die Anzahl und der Abstand dieser Orte wiederum in Abhängigkeit von der vorgesehenen Anwendung des Verbundwerkstoffs bestimmt werden. Das Zusammenfügen der Metallfolien 1, 2 sowie das endgültige Aushärten des Klebstoffs wird dann gemäß der weiter unten folgenden Erläuterung vorgenommen.

Bei einer weiteren Ausführung der Beflockungseinrichtung 8 kann anstelle des Behälters 81 eine Schneideinrichtung vorgesehen sein, mit der die zugeführten Faserbündel über der Metallfolie 1 mit einem Laserstrahl oder auf mechanische Weise geschnitten und dann direkt - zum Beispiel unter Einwirkung eines konstanten oder variablen elektrischen und / oder magnetischen Feldes gemäß obiger Erläuterung - auf die Metallfolie 1 geführt werden.

Eine weitere Möglichkeit besteht darin, die Fasern 9 in im wesentlichen ungeschnittenem Zustand zunächst auf der Klebstoffschicht zu fixieren und anschließend zum Beispiel mit einem Messer oder einem Laserstrahl in einer gewünschten Höhe über der Metallfolie 1 abzuschneiden.

Zur Erzielung einer in wesentlichem Maße nicht-senkrechten und ungeordneten Ausrichtung der Fasern 9 relativ zu der Metalloberfläche kann während oder unmittelbar nach dem Aufbringen der Fasern 9 ein stetiger oder verwirbelter Luftstrom auf die Fasern 9 und / oder die Metallfolie 1 gerichtet werden. Zu diesem Zweck ist vorzugsweise im Bereich der Beflockungseinrichtung 8 eine entsprechende Gebläseeinrichtung (nicht dargestellt) vorgesehen. Sofern die Fasern 9 mit einer gemeinsamen Vorzugsrichtung schräg zur Oberfläche der Metallfolie 1 ausgerichtet werden sollen, bietet sich die Anwendung einer Klinge an, die nach dem Aufbringen der Fasern 9 über die beflockte Fläche gestrichen wird.

Bei geeignetem Fasermaterial können die Fasern 9 auch mit einem entsprechenden elektrischen und / oder magnetischen Feld ausgerichtet werden. Als Parameter, mit denen die Ausrichtung beeinflußt werden kann, sind im wesentlichen die Stärke und Richtung des Feldes, der Abstand der das Feld erzeugenden Einrichtung von der beflockten Fläche sowie die Bewegungsgeschwindigkeit der beflockten Fläche anzusehen. Durch eine Mehrzahl von relativ kleinen Felderzeugungseinrichtungen, die einzeln angesteuert werden, kann auch eine Ausrichtung der Fasern 9 erzielt werden, die sich musterartig über die gesamte beflockte Fläche gezielt einstellen läßt.

Eine weitere Möglichkeit besteht darin, die beflockte Fläche unter einem Metallstab vorbeizuführen, wobei der Metallstab und die Fasern 9 auf solchen Potentialen liegen, dass die Fasern 9 von dem Metallstab angezogen oder abgestoßen und auf diese Weise schräg gestellt werden.

Schließlich ist vorzugsweise und insbesondere in dem Fall, in dem nur bestimmte Bereiche der Metalloberfläche mit Klebstoff 5 beschichtet wurden, eine dritte Einrichtung (nicht dargestellt) vorgesehen, mit der die zwischen diesen Bereichen liegenden Fasern 9 entfernt werden, bevor die Metallfolien 1, 2 zusammengefügt werden. Diese dritte Einrichtung kann eine Abblas- oder Absaugvorrichtung sein, oder die Fasern werden zum Beispiel mittels eines elektrischen und / oder magnetischen Feldes entfernt.

Insbesondere bei einem relativ dünnflüssigen Kleber 5 kann es vorteilhaft sein, diesen unmittelbar vor oder nach dem Aufbringen der Fasern 9 etwas anzuhärten, um damit bereits eine Vor-Fixierung der Fasern 9 zu erzielen, bevor die beiden Metallfolien 1, 2 zusammengefügt werden. Das Anhärten kann zum Beispiel mit einem entsprechenden Heißluftstrom, durch induktive Erwärmung oder durch Bestrahlung mit Infrarot- oder UV-Licht unmittelbar vor dem Eintritt der ersten Metallfolie 1 in die Beflockungseinrichtung 8 erfolgen. Sofern dabei die Gefahr besteht, dass sich die Metallfolie 1 verzieht, kann dies dadurch verhindert werden, dass diese entweder nur teilweise mit Klebstoff 5 beschichtet und / oder eine Metallfolie 1 mit höherer Festigkeit verwendet wird.

Wenn andererseits ein Klebstoff 5 mit einer sehr hohen Viskosität gewählt wird, kann es sinnvoll sein, diesen vor dem Beflocken durch Aufheizen etwas flüssiger zu machen, so dass die Fasern 9 besser in die Klebstoffschicht eindringen können. Dies gilt auch für den auf die zweite Metallfolie 2 aufgebrachten Klebstoff 5 vor dem Zusammenfügen mit der ersten Metallfolie 1. Eine solche Erwärmung kann wiederum zum Beispiel mit Hilfe eines Warmluftstroms, durch Bestrahlung mit Infrarot- oder UV-Licht, durch induktive Erwärmung des ggf. mit Metallpartikeln versetzten Klebstoffs 5 und / oder der Metallfolien 1, 2 und / oder der Fasern 9, oder, wie bereits erwähnt wurde, mit Hilfe der beheizbaren Rollen 3, 6 erreicht werden.

Eine Alternative zur Beflockung der Metallfolie 1 mit Fasern 9 besteht darin, anstelle des Klebstoffs 5 eine mit einem Mischer hergestellte Mischung aus Klebstoff 5 und Fasern 9 auf die erste und / oder die zweite Metallfolie 1, 2 aufzubringen. Damit kann zum einen eine besonders willkürliche und ungeordnete Ausrichtung der Fasern relativ zu der Oberfläche der Metallfolien 1, 2 erreicht werden. Andererseits ist es aber auch möglich, durch Anlegen eines elektrischen und / oder magnetischen Feldes die Fasern 9 nach dem Aufbringen der Mischung wie oben beschrieben auszurichten. In beiden Fällen kann es auch ausreichend sein, nur eine der beiden Metallfolien 1, 2 zu beschichten.

In diesem Fall kann es vorteilhaft sein, zumindest eine der Metallfolien der Vorrichtung zuzuführen, die mit einer solchen, mit einer Schutzfolie abgedeckten Mischung vorbeschichtet ist, wie es oben bezüglich einer mit Klebstoff beschichteten und mit einer Schutzfolie abgedeckten Metallfolie beschrieben wurde.

Insgesamt können somit zur Erzielung von entlang einer Breite und / oder Länge des Verbundwerkstoffs unterschiedlichen (richtungsabhängigen) physikalischen und / oder elektrischen Eigenschaften die Fasern 9 mit unterschiedlicher Art, Dichte, Dicke, Länge, Material und / oder unterschiedlicher Ausrichtung relativ zu den Deckschichten auf mindestens eine der Deckschichten aufgebracht werden, wobei die oben beschriebenen Maßnahmen ggf. auch miteinander kombiniert werden können. Die gegenseitige Verschiebbarkeit der Deckschichten kann dabei einen wesentlichen Einfluß auf diese richtungsabhängigen Eigenschaften haben.

Die Ausgestaltung des Trockners 12, mit dem die beiden Metallfolien 1, 2 durch Aneinanderpressen und Aushärten des Klebstoffs 5 fest miteinander verbunden werden, und insbesondere deren Abstand, die Höhe der Temperatur und des Drucks sowie die Dauer von deren Einwirkung auf die Metallfolien 1, 2, ist im wesentlichen von der Art des verwendeten Klebstoffs 5 und der Dicke und Qualität der Metallfolien 1, 2 abhängig.

Zur unterscheiden ist diesbezüglich insbesondere zwischen den heißschmelzenden Klebstoffen, die in warmem oder heißem Zustand flüssig sind und durch Abkühlen aushärten, sowie anderen Klebstoffen wie zum Beispiel Epoxy-Klebstoffen, die durch Hitzeeinwirkung aushärten. In Abhängigkeit davon weist das Presswerk 123 ggf. zusätzlich eine entsprechende Heizeinrichtung auf.

In dem Fall, in dem der Verbundwerkstoff durch Umformvorgänge wie zum Beispiel Tiefziehen bearbeitet werden soll, bei denen der Werkstoff im allgemeinen erwärmt wird, ist insbesondere ein solcher Klebstoff vorteilhaft, dessen Festigkeit mit zunehmender Temperatur abnimmt, so dass sich die Kernschicht fließend der Formgebung der Metallfolien 1, 2 anpassen kann.

Wesentlich dafür, dass sich die Metallfolien 1, 2 beim Härten nicht verziehen, ist eine möglichst homogene und gleichmäßige Erwärmung in dem Presswerk 123 sowie anschließend eine möglichst gleichmäßige Abkühlung, und zwar jeweils möglichst beider Metallfolien 1, 2 gleichzeitig.

Dies kann zum einen dadurch erreicht werden, dass die beiden Metallfolien 1, 2 nach dem Erreichen der Presswerke 123 zunächst auf eine Starttemperatur erwärmt werden, bevor sie dann weiter auf die Aushärtungstemperatur des Klebstoffs aufgeheizt und gleichzeitig zusammengepreßt werden. Die Starttemperatur kann dabei in Abhängigkeit von der Aushärtungstemperatur des Klebstoffs und der Stärke der Metallfolien 1, 2 zum Beispiel etwa 100°C betragen.

Eine andere Möglichkeit besteht darin, die beiden Metallfolien 1, 2 nicht direkt mit den Presswerken 123 in Berührung zu bringen, sondern zwischen diese und die Metallfolien 1, 2 jeweils ein Flächenelement wie zum Beispiel ein Blech, eine Metallplatte, eine Folie, ein Textilmaterial usw. einzubringen, das eine höhere Wärmekapazität und / oder eine schlechtere Wärmeleitfähigkeit als die Metallfolien 1, 2 aufweist. Damit wird erreicht, dass die Metallfolien 1, 2 nicht schlagartig an den (ersten) Berührungsstellen mit dem Presswerken 123 erwärmt werden, sondern dass ein Temperaturgefälle zwischen den Pressplatten und den Metallfolien 1, 2 entsteht, über das diese gleichmäßig und langsamer erwärmt werden. Der Aufheizvorgang läßt sich durch geeignete Wahl des Materials für die Flächenelemente und deren Dicke optimieren.

Die Flächenelemente können nach dem Pressen und Aushärten des Klebstoffs 5 auch dazu dienen, eine gleichmäßige Abkühlung der Metallfolien 1, 2 sicherzustellen und damit ein Verziehen zu vermeiden. Sofern erforderlich kann die Abkühlung auch durch ein entlang oder über die freien Seiten der Flächenelemente geführtes Kühlmittel gesteuert werden. Zu diesem Zweck können die Flächenelemente auch entsprechende Kühlmittelkanäle aufweisen.

Insbesondere bei besonders dünnen Metallfolien 1, 2 und / oder solchen mit relativ schlechter Qualität kann die Gefahr der Ausbildung von Dellen auch weitgehend dadurch vermieden werden, dass die Temperatur in dem Preßwerk 123 vermindert und dafür die Preßdauer entsprechend verlängert wird.

Auch Lufteinschlüsse können zu Dellen führen, wenn die Luft beim Schließen der Preßwerke 123 nicht schnell genug entweichen kann. Abhilfe kann dadurch geschaffen werden, dass zwischen die Metallfolien 1, 2 einerseits und die Presswerke andererseits ein hitzebeständiges Gewebe (z. B. Glasfasergewebe) eingelegt wird, durch das die Luft seitlich auch aus dem Preßwerk 123 entweichen kann.

Die beiden Metallfolien 1, 2 können besonders gleichmäßig und schnell auch mittels einer an sich bekannten induktiven Heizung (nicht dargestellt) erwärmt werden. Dies gilt insbesondere dann, wenn die Fasern 9 metallisch sind und auch der Klebstoff 5 metallische Partikel enthält, da in diesem Fall die Wärme auch zwischen den Metallfolien 1, 2 entsteht und eine besonders schnelle und gleichmäßige Erwärmung des Klebstoffs 5 ermöglicht und auch ein Verziehen der Metallfolien 1, 2 verhindert wird.

Weiterhin besteht die Möglichkeit, die Aushärtung des Klebstoffs 5 zwischen den beiden Metallfolien 1, 2 in zwei oder mehr Stufen durchzuführen. Dabei könnte zum Beispiel nach dem Zusammenfügen der Metallfolien 1, 2 in dem Trockner 12 gemäß Figur 1 mit einer ersten Stufe eine Vorhärtung in dem Maße erfolgen, dass die Metallfolien 1, 2 beim späteren Endhärten nicht mehr expandieren. Die Metallfolien 1, 2 könnten dann zunächst mit der Schneideinrichtung 13 in gewünschter Weise zugeschnitten werden, um anschließend die einzelnen Teile in einer zweiten Stufe (nicht dargestellt) mit gleicher oder höherer Temperatur, mit der die Endfestigkeit erreicht wird, endzuhärten, wobei die Teile zu diesem Zweck in einen entsprechenden Ofen mit aufgrund der Vorhärtung im wesentlichen beliebiger Lage eingebracht werden können.

Bei Verwendung eines bekannten Preßwerkes 123 ist im allgemeinen der Abstand, auf den die Metallfolien 1, 2 in dem Trockner 12 zusammengedrückt werden, einstellbar. In Abstimmung mit der Menge des auf die Metallfolien 1, 2 aufgebrachten Klebstoffs 5 beziehungsweise der Dicke der Klebstoffschicht lassen sich im Hinblick auf die Kompaktheit der entstehenden Kernschicht zwei Alternativen unterscheiden, die zu unterschiedlichen Materialeigenschaften führen.

Bei der ersten Alternative ist der Abstand so groß und / oder die Menge des Klebstoffs 5 beziehungsweise die Dicke der Klebstoffschicht so gering, dass die auf der ersten Metallfolie 1 befindlichen Faser 9 mit ihren freien Enden nur so weit in die Klebstoffschicht auf der zweiten Metallfolie 2 eindringen, dass nach dem Aushärten des Klebstoffs eine sichere Verbindung zwischen beiden Metallfolien 1, 2 gewährleistet ist.

Bei der zweiten Alternative werden die Metallfolien 1, 2 auf einen so geringen Abstand zusammengedrückt und / oder die Menge des Klebstoffs 5 beziehungsweise die Dicke der Klebstoffschicht so weit erhöht, dass zwischen den Metallfolien 1, 2 eine im wesentlichen homogene, die Fasern vollständig umschäumende bzw. umschließende und poröse bzw. kompakte Kernschicht entsteht.

Hierbei ist allerdings sicherzustellen, dass eventuell in der Klebstoffschicht vorhandene Luftblasen im wesentlichen entweichen können, oder dass die Klebstoffschicht vor dem Zusammenfügen der Metallfolien 1, 2 zumindest im wesentlichen frei von solchen Blasen ist. Dies kann zum Beispiel dadurch erreicht werden, dass zwischen dem Aufbringen des Klebstoffs 5 und dem Zusammenfügen der Metallfolien 1, 2 eine bestimmte Zeitdauer verstreicht, oder ein (Heiß-) Luftstrom über die Klebstoffschicht geführt wird, so dass die unter seiner Oberfläche befindlichen Blasen zerplatzen.

Für bestimmte Anwendungen und aus Gründen des Material-Recycling kann es wünschenswert sein, auf Klebstoff 5 zumindest weitgehend zu verzichten. In diesem Fall können die Fasern 9 zunächst gemäß der Darstellung in Figur 4 in eine Trägersubstanz 91 in Form eines Bogens aus Papier oder einem ähnlichen Material eingebracht werden, so dass sie zu beiden Seiten der Trägersubstanz 91 mit ihren freien Enden hervorstehen. Gegebenenfalls werden die Fasern 9 dann durch Kürzen der freien Enden auf die gewünschte Länge gebracht (zum Beispiel mittels eines Laserstrahls), bevor auf die Faserspitzen ein elektrisch leitender Klebstoff 5 aufgebracht und die Trägersubstanz 91 dann auf die erste Metallfolie 1 aufgelegt wird.

Anschließend werden die Fasern 9 durch induktives Erwärmen des Klebstoffs 5 auf die erste Metallfolie 1 geklebt. Durch die Trägersubstanz 91 wird gewährleistet, dass sie dabei ihre im wesentlichen senkrechte Stellung relativ zu der Metallfolie 1, oder - sofern sie mit einem Anstellwinkel in die Trägersubstanz 91 eingebracht wurden - diesen Winkel während des Klebevorgangs beibehalten. Nach dem Erkalten des Klebstoffs 5 kann die Trägersubstanz 91 entfernt und die zweite Metallfolie 2 zum Beispiel mit einem weiteren solchen Klebevorgang aufgebracht werden.

Weiterhin ist es auch möglich, metallische Fasern 9 durch induktives Heftschweißen direkt auf der Metallfolie 1 zu befestigen. Zu diesem Zweck wird zunächst ein Substrat auf die erste Metallfolie 1 aufgebracht, in das die Fasern 9 beim Beflocken leicht eindringen können, so dass sie fixiert sind. Anschließend wird die erste Metallfolie 1 induktiv erhitzt. Durch entsprechende Wahl der Leitfähigkeit des Substrates ist eine gezielte Erhitzung des Übergangs zwischen der ersten Metallfolie 1 und den Fasern 9 erzielbar, so dass beide miteinander verschweißt werden. In gleicher Weise oder nach einer der oben erläuterten anderen Arten wird dann die zweite Metallfolie 2 aufgebracht.

Die oben beschriebenen Herstellungsverfahren sind - mit wenigen Ausnahmen, die für einen Fachmann offensichtlich sind - auch dann anwendbar, wenn anstelle einer oder beider Metallfolien 1, 2 bzw. Metallplatten ein nichtmetallisches Material (zum Beispiel Kunststoffe wie Kevlar o. a.) als Deckschicht verwendet wird, oder wenn die Fasern 9 aus einem nichtmetallischen Material hergestellt sind. Insbesondere wäre es auch möglich, Bögen aus Papier oder Pappe anstelle einer oder beider Metallfolien 1, 2 zu verwenden, wodurch eine wesentliche Gewichtseinsparung erzielt werden kann.

In dieser Hinsicht sind eine Vielzahl von verschiedenen Materialkombinationen für die Deckschichten und die (eine oder mehrere) Kernschicht(en) realisierbar. So kann z. B. eine Kombination aus Metall und Nicht-Metall für die beiden Deckschichten gewählten werden, zwischen denen sich eine Kernschicht mit Metallfasern befinden. Bei einer mehrfachen Verbundstruktur kann es vorteilhaft sein, die äußeren Deckschichten aus einem nichtmetallischen Material, wie insbesondere einem Kunststoff zu fertigen, um die Verbundstruktur korrosionsbeständig zu machen, während die innen liegenden Deckschichten aus einem metallischen Material bestehen, um bestimmte physikalische Eigenschaften der Struktur zu erzielen, wobei die Kemschichten ebenfalls metallische und / oder nicht-metallische Fasern enthalten können.

Insbesondere bei Verwendung einer Mischung aus metallischen und nichtmetallischen Fasern 9, auch mit unterschiedlichen Mischungsverhältnissen entlang einer beflockten Fläche, können gezielt bestimmte Parameter wie zum Beispiel die elektrische Leitfähigkeit zwischen den Deckschichten oder die mechanischen Dämpfungseigenschaften beeinflußt bzw. eingestellt werden. Dies betrifft zum Beispiel auch die Verwendung einer Mischung von Fasern 9 mit unterschiedlicher Länge und / oder Dicke und / oder aus unterschiedlichen Materialien und ggf. unterschiedlichen Mischungsverhältnissen entlang der beflockten Fläche.

Mit einem entsprechenden Anteil von kürzeren oder verformten Fasern, die nur mit einem Ende in einer Klebstoffschicht fixiert sind und mit dem anderen Ende frei stehen, kann eine erhebliche Verbesserung der schall- und schwingungsdämpfenden Eigenschaften der Verbundstruktur erzielt werden kann. Diese Eigenschaften sind dabei umso besser, je höher der Anteil an solchen kürzeren oder verformten Fasern in der Beflockung ist. Der damit eventuell verbundene geringe Verlust an Festigkeit könnte - sofern erforderlich - zum Beispiel durch eine Erhöhung der gesamten Faserdichte im wesentlichen ausgeglichen werden.

Gegebenenfalls können zusätzlich zu der Fasern 9 auch kugelförmige, quaderförmige oder ähnlich geformte Körper aus metallischen und / oder nichtmetallischen Materialien und / oder mit unterschiedlichen Abmessungen verwendet werden.

Das erfindungsgemäße Verfahren ist auch zur Herstellung von mehrfachen Verbundstrukturen geeignet, bei denen mehrere Lagen der oben beschriebenen Art mit Fasermaterial zusammengefügt werden, oder indem eine zusätzliche Lage eines gleichen oder anderen Materials auf die Verbundstruktur aufgebracht wird, um dieser besondere mechanische oder andere Eigenschaften zu verleihen. Insbesondere kann eine in der beschriebenen Weise hergestellte einfache Verbundstruktur (d. h. eine solche mit drei Schichten) zusammen mit einer Deckschicht oder einer weiteren einfachen Verbundstruktur erneut durch die Vorrichtung geführt werden, um beide durch Erzeugung einer Kernschicht in der beschriebenen Weise miteinander zu verbinden.

Weiterhin können mit dem erfindungsgemäßen Verfahren nicht nur flächige Verbundstrukturen hergestellt werden. Es könnte zum Beispiel auch ein doppelwandiges Rohr geschaffen werden, indem zunächst ein Innenrohr mit Klebstoff beschichtet und beflockt und anschließend ein Blech darumgelegt oder ein Streifen aus Metall oder einem anderen Material als Außenrohr wendelförmig darauf aufgewickelt und der Klebstoff ausgehärtet wird.

Die Festigkeit der in der oben beschriebenen Weise hergestellten Verbundstrukturen kann gegebenenfalls auch durch abschließendes Tempern weiter erhöht werden.

Die mechanischen Eigenschaften der erfindungsgemäßen Verbundwerkstoffe können mit Hilfe der numerischen Methode der finiten Elemente relativ genau vorausberechnet werden. Dabei können insbesondere die Einflüsse der Dichte, des Durchmessers, der Ausrichtung, der Fixierung sowie des Materials der verwendeten Fasern, die Einflüsse des Materials und der Schichtdicke des Klebstoffs, sowie des Materials und der Dicke der Deckschichten ermittelt werden. Ferner lassen sich damit auch die Einflüsse verschiedener Klebstoff- bzw. Beflockungsmuster (Form, Flächendeckungsgrad, Muster) auf den Deckschichten auf die mechanischen und thermodynamischen Eigenschaften ermitteln.

Weiterhin kann mit der numerischen Methode der finiten Elemente auch der Wärmeverzug der Verbundwerkstoffe insbesondere bei der Kombination verschiedener Materialien untersucht werden. Zu diesem Zweck wird der Eigenspannungszustand, der durch die unterschiedlichen Wärmeausdehnungen in dem Klebstoff und den Deckschichten entsteht, berechnet.

Das erfindungsgemäße Verfahren ist schließlich auch zur Herstellung von Werkstücken aus vorgeformten Deckschichten geeignet, die in der beschriebenen Weise mit Klebstoff beschichtet, beflockt und anschließend zusammengefügt werden, wenn die entsprechenden Einrichtungen zum Halten und Führen der Deckschichten in geeigneter Weise ausgebildet sind.

## Patentansprüche

1. Vorrichtung zur Herstellung eines Verbundwerkstoffes aus mindestens einer ersten und mindestens einer zweiten Deckschicht (1, 2), zwischen denen sich eine Kernschicht (30) befindet, die eine Zusammensetzung aus Fasern (9) und Klebstoff (5) aufweist, mit:
- mindestens einer Zuführung (3; 6) für die mindestens eine erste und die mindestens eine zweite Deckschicht (1;2);
- einer ersten Einheit (4, 7; 8) zum Erzeugen der Kernschicht (30), die mindestens eine erste und mindestens eine zweite Einrichtung (4, 7) zum Aufbringen des Klebstoffs (5) auf die mindestens eine erste und die mindestens eine zweite Deckschicht (1; 2), sowie mindestens eine Beflockungseinrichtung (8) zum Aufbringen der Fasern (9) auf die mit dem Klebstoff (5) beschichteten Bereiche mindestens einer der Deckschichten (1, 2) aufweist;
- wobei lokal unterschiedliche physikalische Eigenschaften des Verbundwerkstoffes **dadurch** erzielbar sind, dass die erste und/oder die zweite Einrichtung (4, 7) zum Aufbringen des Klebstoffs (5) auf bestimmte Bereiche der Deckschichten (1; 2) vorgesehen ist und/oder die Beflockungseinrichtung (8) zum Aufbringen der Fasern (9) mit unterschiedlicher Art und/oder Dichte und/oder Dicke und/oder Länge und/oder Material und/oder Ausrichtung relativ zu den Deckschichten vorgesehen ist;
- mindestens einer zweiten Einheit (12) zum Zusammenfügen der Deckschichten (1, 2) und zum Härten des Klebstoffs (5); sowie
- einer Fördereinrichtung (121', 121"; 122', 122"), mit der die zugeführten Deckschichten (1, 2) zumindest im Wesentlichen kontinuierlich durch die Vorrichtung förderbar sind.

2. Vorrichtung zur Herstellung eines Verbundwerkstoffes aus mindestens einer ersten und mindestens einer zweiten Deckschicht (1, 2), zwischen denen sich eine Kernschicht (30) befindet, die eine Zusammensetzung aus Fasern (9) und Klebstoff (5) aufweist, mit:
- mindestens einer Zuführung (3; 6) für die mindestens eine erste und die mindestens eine zweite Deckschicht (1; 2);
- einer ersten Einheit (4, 7; 8) zum Erzeugen der Kernschicht (30), die zum Aufbringen einer Mischung aus Fasern (9) und Klebstoff (5) auf mindestens eine der Deckschichten (1; 2) in der Weise vorgesehen ist, dass die Mischung lokal nur auf bestimmte Bereiche der Deckschichten (1; 2) aufgebracht wird, wobei diese Bereiche die Form eines Musters mit Hohlräumen oder Kanälen, die frei von der Mischung bleiben, oder die Form einer nicht-zusammenhängenden Schicht mit Inseln der Mischung in der Weise aufweisen, dass Eigenspannungen aufgrund von unterschiedlichen thermischen Ausdehnungskoeffizienten der Deckschichten (1, 2) zumindest im Wesentlichen vermieden werden,
- mindestens einer zweiten Einheit (12) zum Zusammenfügen der Deckschichten (1, 2) und zum Härten des Klebstoffs (5); sowie
- einer Fördereinrichtung (121', 121"; 122', 122"), mit der die zugeführten Deckschichten (1, 2) zumindest im Wesentlichen kontinuierlich durch die Vorrichtung förderbar sind.

3. Vorrichtung nach Anspruch 1 oder 2,
**dadurch gekennzeichnet, dass** mindestens eine der Einrichtungen (4, 7) zum Aufbringen des Klebstoffs (5) bzw. zum Aufbringen der Mischung aus Fasern (9) und Klebstoff (5) ein für den Klebstoff (5) bzw. die Mischung aus Fasern (9) und Klebstoff (5) zumindest in Teilbereichen durchlässiges Sieb (47, 77) aufweist, durch das der Klebstoff (5) bzw. die Mischung aus Fasern (9) und Klebstoff (5) auf mindestens eine der Deckschichten (1, 2) aufbringbar ist.

4. Vorrichtung nach Anspruch 3,
**dadurch gekennzeichnet, dass** das Sieb in Form eines um eine Mehrzahl von Rollen (42, 43, 44) geführten Bandes (41) ausgebildet ist, das mit einem Abschnitt auf der Deckschicht (1,2) ruht und durch dessen Förderung mitbewegt wird.

5. Vorrichtung nach Anspruch 1 oder 2,
**dadurch gekennzeichnet, dass** mindestens eine der Einrichtungen (4, 7) zum Aufbringen des Klebstoffs (5) bzw. der Mischung aus Fasern (9) sowie Klebstoff (5) durch ein Sprühsystem mit einer Mehrzahl von aktivierbaren und / oder schwenkbaren Sprühdüsen gebildet ist.

6. Vorrichtung nach Anspruch 1,
**dadurch gekennzeichnet, dass** die Beflockungseinrichtung (8) mindestens einen Behälter (81) mit einem für die Fasern (9) durchlässigen Boden sowie mindestens eine Vibrationseinrichtung umfasst, mit der mindestens einer der Behälter (81) zur Erhöhung oder Modulation der Menge der durch den Boden hindurchtretenden Fasern (9) einer Vibration aussetzbar ist.

7. Vorrichtung nach Anspruch 1,
**dadurch gekennzeichnet, dass** die Beflockungseinrichtung (8) mindestens einen Behälter (81) mit einem für die Fasern (9) durchlässigen Boden sowie mindestens ein Mittel zum Erzeugen eines elektrischen und / oder magnetischen Feldes (82) zwischen dem mindestens einen Behälter (81) und der mindestens einen ersten Deckschicht (1) aufweist, so dass die durch den Boden hindurchtretenden Fasern (9) in Richtung auf die mindestens eine erste Deckschicht (1) beschleunigt werden, wobei die Stärke des elektrischen und / oder magnetischen Feldes (82) zur Veränderung oder Modulation der Menge von auf die mindestens eine erste Deckschicht (1) auftreffenden Fasern (9) veränderbar ist.

8. Verfahren zur Herstellung eines Verbundwerkstoffes aus mindestens einer ersten und mindestens einer zweiten Deckschicht (1, 2), zwischen denen sich eine Kernschicht (30) befindet, die eine Zusammensetzung aus Fasern (9) und Klebstoff (5) aufweist,
**gekennzeichnet durch** folgende Schritte, von denen mindestens einer in einem zumindest im Wesentlichen kontinuierlichen Durchlaufbetrieb ausgeführt wird:
(a1) Aufbringen des Klebstoffs (5) auf die mindestens eine erste und die mindestens eine zweite Deckschicht (1; 2);
(b1) Aufbringen der Fasern (9) auf die mit dem Klebstoff (5) beschichteten Bereiche mindestens einer der Deckschichten (1, 2),
wobei lokal unterschiedliche physikalische Eigenschaften des Verbundwerkstoffs **dadurch** erzielt werden, dass der Klebstoff (5) auf bestimmte Bereiche der Deckschichten (1; 2) aufgebracht wird und/oder die Fasern (9) mit unterschiedlicher Art und/oder Dichte und/oder Dicke und/oder Länge und/oder Material und/oder Ausrichtung relativ zu den Deckschichten aufgebracht werden; und
(c1) Zusammenfügen der Deckschichten (1, 2) und Härten des Klebstoffs (5).

9. Verfahren zur Herstellung eines Verbundwerkstoffes aus mindestens einer ersten und mindestens einer zweiten Deckschicht (1, 2), zwischen denen sich eine Kernschicht (30) befindet, die eine Zusammensetzung aus Fasern (9) sowie Klebstoff (5) aufweist,
**gekennzeichnet durch** folgende Schritte, von denen mindestens einer in einem zumindest im Wesentlichen kontinuierlichen Durchlaufbetrieb ausgeführt wird:
(a2) Aufbringen einer Mischung aus Fasern (9) und Klebstoff (5) auf mindestens
eine der Deckschichten (1, 2);
wobei die Mischung lokal nur auf bestimmte Bereiche der Deckschichten (1; 2) aufgebracht wird, wobei diese Bereiche die Form eines Musters mit Hohlräumen oder Kanälen, die frei von der Mischung bleiben, oder die Form einer nicht-zusammenhängenden Schicht mit Inseln der Mischung in der Weise aufweisen, dass Eigenspannungen aufgrund von unterschiedlichen thermischen Ausdehnungskoeffizienten der Deckschichten (1, 2) zumindest im Wesentlichen vermieden werden, und
(b2) Zusammenfügen der Deckschichten (1, 2) und Härten des Klebstoffs (5).

10. Verfahren nach Anspruch 8 oder 9,
**dadurch gekennzeichnet, dass** der Schritt (a1) bzw. (a2) mit einem dem Siebdruck entsprechenden Verfahren durchgeführt wird.

11. Verfahren nach Anspruch 8 oder 9,
**dadurch gekennzeichnet, dass** der Klebstoff (5) bzw. die Mischung aus Fasern (9) und Klebstoff (5) durch Sprühen aufgebracht wird.

12. Verfahren nach Anspruch 8 oder 9,
**dadurch gekennzeichnet, dass** der Klebstoff (5) bzw. die Mischung aus Fasern (9) und Klebstoff (5) im Wesentlichen punktförmig aufgebracht wird.

13. Verfahren nach Anspruch 8,
**dadurch gekennzeichnet, dass** der Klebstoff (5) in einer nicht-zusammenhängenden Schicht aufgebracht wird, um insbesondere Eigenspannungen aufgrund von unterschiedlichen thermischen Ausdehnungskoeffizienten der Deckschichten (1, 2) zumindest weitgehend zu vermeiden.

14. Verfahren nach Anspruch 8 oder 9,
**dadurch gekennzeichnet, dass** die Schritte (a1) und / oder (b1) bzw. (a2) so ausgeführt werden, dass der Verbundwerkstoff zumindest in einem Bereich von Klebstoff (5) und / oder Fasern (9) bzw. der Mischung aus Fasern (9) und Klebstoff (5) frei bleibt, in dem dieser durch Schweißen, Schneiden, Knicken, Biegen oder in ähnlicher Weise weiterbearbeitbar ist.

15. Verfahren nach Anspruch 8 oder 9,
**dadurch gekennzeichnet, dass** die Schritte (a1) und / oder (b1) bzw. (a2) so ausgeführt werden, dass durch den Klebstoff (5) und die Fasern (9) bzw. die Mischung aus Fasern (9) und Klebstoff (5) zwischen den Deckschichten (1, 2) Bereiche abgegrenzt werden, die zur Führung von flüssigen oder gasförmigen Medien oder zur Aufnahme von Gegenständen geeignet sind.

16. Verfahren nach Anspruch 15,
**dadurch gekennzeichnet, dass** die flüssigen oder gasförmigen Medien oder Gegenstände nach den Schritten (a1) und / oder (b1) bzw. (a2) und vor oder nach dem Härten des Klebstoffs (5) in die Bereiche eingebracht werden.

17. Verfahren nach Anspruch 8,
**dadurch gekennzeichnet, dass** dem Klebstoff (5) vor dem Aufbringen der Fasern (9) durch Erwärmung eine zum Eindringen der Fasern (9) geeignete Viskosität verliehen wird.

18. Verfahren nach Anspruch 8 oder 9,
**dadurch gekennzeichnet, dass** die Fasern (9) eine Mischung aus metallischen und nichtmetallischen Fasern darstellen.

19. Verfahren nach Anspruch 8,
**dadurch gekennzeichnet, dass** die Fasern (9) in Form eines Positiv-Negativmusters auf die Deckschichten (1, 2) aufgebracht werden.

20. Verfahren nach Anspruch 8,
**dadurch gekennzeichnet, dass** während oder unmittelbar nach dem Aufbringen der Fasern (9) ein stetiger oder verwirbelter Luftstrom auf die Fasern (9) gerichtet wird, um eine nicht-senkrechte und ungeordnete Ausrichtung der Fasern (9) zu erzielen.

21. Verfahren nach Anspruch 8 oder 9,
**dadurch gekennzeichnet, dass** zum Härten des Klebstoffs (5) bzw. der Mischung aus Fasern (9) und Klebstoff (5) mindestens zwei Stufen vorgesehen sind, die zum Vorhärten und zum Aushärten dienen.

22. Verfahren nach Anspruch 8,
**dadurch gekennzeichnet, dass** die Fasern (9) auf eine Trägersubstanz (91) aufgebracht werden, die Trägersubstanz (91) auf mindestens eine Deckschicht (1; 2) aufgelegt wird und die Fasern (9) anschließend mit der mindestens einen Deckschicht (1; 2) verklebt werden.

23. Verfahren nach Anspruch 22,
**dadurch gekennzeichnet, dass** die Trägersubstanz (91) nach dem Verkleben der Fasern (9) mit einer der Deckschichten (1; 2) entfernt wird.

24. Verfahren nach Anspruch 8 oder 9,
**dadurch gekennzeichnet, dass** die Fasern (9) mit einem elektrischen und / oder magnetischen Feld ausgerichtet werden.

25. Vorrichtung nach Anspruch 1,
bei der zusätzlich zu den Fasern (9) kugelförmige, quarderförmige oder ähnlich geformte Körper verwendet werden.

26. Verfahren nach Anspruch 8,
bei dem zusätzlich zu den Fasern (9) kugelförmige, quarderförmige oder ähnlich geformte Körper verwendet werden.

## Claims

1. Arrangement for the manufacture of a composite material from at least one first and at least one second cover sheet (1, 2) between which a core sheet (30) is provided which comprises a composition of fibers (9) and adhesive (5), comprising:
- at least one conveyance (3; 6) for the least one first and the at least one second cover sheet (1; 2);
- a first unit (4, 7; 8) for generating the core sheet (30) which comprises at least one first and at least one second device (4, 7) for applying the adhesive (5) onto the at least one first and the at least one second cover sheet (1; 2), and at least one flocking device (8) for applying the fibers (9) onto areas of at least one of the cover sheets (1, 2) which are coated with the adhesive (5);
- wherein locally varying physical properties of the composite material can be achieved by providing the first and/or the second device (4, 7) for applying the adhesive (5) onto predetermined areas of the cover sheets (1; 2) and/or by providing the flocking device (8) for applying the fibers (9) with varying kind and/or density and/or thickness and/or length and/or material and/or orientation in relation to the cover sheets;
- at least one second unit (12) for joining together the cover sheets (1, 2) and for curing the adhesive (5); and
- a conveying device (121', 121"; 122', 122") for conveying the fed cover sheets (1, 2) in an at least substantially continuous manner through the arrangement.

2. Arrangement for the manufacture of a composite material from at least one first and at least one second cover sheet (1, 2) between which a core sheet (30) is provided which comprises a composition of fibers (9) and adhesive (5), comprising:
- at least one conveyance (3; 6) for the at least one first and the at least one second cover sheet (1; 2);
- a first unit (4, 7; 8) for generating the core sheet (30), which is provided for applying a mixture of fibers (9) and adhesive (5) onto at least one of the cover sheets (1; 2) in such a way that the mixture is locally applied only onto certain areas of the cover sheets (1, 2), wherein these areas have the form of a pattern comprising cavities or channels which remain free from the mixture, or the form of a non-continuous layer comprising islands of the mixture in such a way that inherent stresses due to different thermal expansion coefficients of the cover sheets (1, 2) are at least substantially avoided;
- at least one second unit (12) for joining together the cover sheets (1, 2) and for curing the adhesive (5); and
- a conveying device (121', 121"; 122', 122") for conveying the fed cover sheets (1, 2) in an at least substantially continuous manner through the arrangement.

3. Arrangement according to claim 1 or 2,
**characterized in that** at least one of the devices (4, 7) for applying the adhesive (5) and for applying the mixture of fibers (9) and adhesive (5), respectively, comprises a sieve (47, 77) which is at least partly permeable for the adhesive (5) and the mixture of fibers (9) and adhesive (5), respectively, through which the adhesive (5) and the mixture of fibers (9) and adhesive (5), respectively, can be applied onto at least one of the cover sheets (1, 2).

4. Arrangement according to claim 3,
**characterized in that** the sieve is provided in the form of a belt (41) which is guided around a plurality of rolls (42, 43, 44), wherein a portion of the belt rests on the cover sheet (1, 2) and is carried with it by the conveyance of the cover sheet.

5. Arrangement according to claim 1 or 2,
**characterized in that** at least one of the devices (4, 7) for applying the adhesive (5) and the mixture of fibers (9) and adhesive (5), respectively, is provided by a spray system comprising a plurality of spray nozzles which can be activated and/or swiveled.

6. Arrangement according to claim 1,
**characterized in that** the flocking device (8) comprises at least one vessel (81) having a bottom which is permeable for the fibers (9), and at least one vibrating device with which the at least one vessel (81) can be subjected to a vibration in order to increase or modulate the amount of fibers (9) which penetrate through the bottom.

7. Arrangement according to claim 1,
**characterized in that** the flocking device (8) comprises at least one vessel (81) having a bottom which is permeable for the fibers (9), and at least one device for generating an electric and/or magnetic field (82) between the at least one vessel (81) and the at least one first cover sheet (1), so that the fibers (9) penetrating through the bottom are accelerated in the direction of the at least one first cover sheet (1), wherein the strength of the electric and/or magnetic field (82) can be varied in order to vary or modulate the amount of fibers (9) impacting onto the at least one first cover sheet (1).

8. Method for the manufacture of a composite material from at least one first and at least one second cover sheet (1, 2) between which a core sheet (30) is provided which comprises a composition of fibers (9) and adhesive (5),
**characterized in** the following steps wherein at least one of the steps is executed in an at least substantially continuous operation:
(a1) applying the adhesive (5) onto the at least one first and the at least one second cover sheet (1; 2),
(b1) applying the fibers (9) onto areas coated with the adhesive (5) of at least one of
the cover sheets (1, 2),
wherein locally varying physical properties of the composite material are achieved by applying the adhesive (5) onto predetermined areas of the cover sheets (1; 2) and/or by applying the fibers (9) with varying kind and/or density and/or thickness and/or length and/or material and/or orientation in relation to the cover sheets; and
(c1) joining together the cover sheets (1, 2).

9. Method for the manufacture of a composite material from at least one first and at least one second cover sheet (1, 2) between which a core sheet (30) is provided which comprises a composition of fibers (9) and adhesive (5),
**characterized in** the following steps wherein at least one of the steps is executed in an at least substantially continuous operation:
(a2) applying a mixture of fibers (9) and adhesive (5) onto at least one of the cover sheet (1, 2),
wherein the mixture is locally applied only onto certain areas of the cover sheets (1; 2), wherein these areas have the form of a pattern comprising cavities or channels which remain free from the mixture, or the form of a non-continuous layer comprising islands of the mixture in such a way that inherent stresses due to different thermal expansion coefficients of the cover sheets (1, 2) are at least substantially avoided, and
(b2) joining together the cover sheets (1, 2) and curing the adhesive (5).

10. Method according to claim 8 or 9,
**characterized in that** the steps (a1) and (a2), respectively, are executed with a screen printing like method.

11. Method according to claim 8 or 9,
**characterized in that** the adhesive (5) and the mixture of fibers (9) and adhesive (5), respectively, is applied by spraying.

12. Method according to claim 8 or 9,
**characterized in that** the adhesive (5) and the mixture of fibers (9) and adhesive (5), respectively, is applied substantially in the form of dots.

13. Method according to claim 8,
**characterized in that** the adhesive (5) is applied in a non continuous layer, in order to especially avoid inherent stresses due to different thermal expansion coefficients of the cover sheets (1, 2) at least substantially.

14. Method according to claim 8 or 9,
**characterized in that** the steps (a1) and/or (b1), and (a2), respectively, are executed such that the composite material remains free of adhesive (5) and/or fibers (9), and of the mixture of fibers (9) and adhesive (5), respectively, at least in an area in which it is to be machined by welding, cutting, buckling, bending or in a similar way.

15. Method according to claim 8 or 9,
**characterized in that** the steps (a1) and/or (b1), and (a2), respectively, are executed such that areas are delimited by the adhesive (5) and the fibers (9), and the mixture of fibers (9) and adhesive (5), respectively, between the cover sheets (1, 2) which are suitable for guiding liquid or gaseous media or for receiving objects.

16. Method according to claim 15,
**characterized in that** the liquid or gaseous media or the objects are introduced in said areas after executing steps (a1) and/or (b1), and (a2), respectively, and before or after curing the adhesive (5).

17. Method according to claim 8,
**characterized in that** before applying the fibers (9) the adhesive (5) is given a viscosity by heating which is suitable for the penetration of the fibers (9).

18. Method according to claim 8 or 9,
**characterized in that** the fibers (9) are provided in the form of a mixture of metallic and non-metallic fibers.

19. Method according to claim 8,
**characterized in that** the fibers (9) are applied onto the cover sheets (1, 2) in the form of a positive/negative pattern .

20. Method according to claim 8,
**characterized in that** during or immediately after applying the fibers (9) a steady or swirled stream of air is directed onto the fibers (9) in order to obtain a non perpendicular and inordinate orientation of the fibers (9).

21. Method according to claim 8 or 9,
**characterized in that** for curing the adhesive (5) and the mixture of fibers (9) and adhesive (5), respectively, at least two steps are provided which serve for pre-curing and final curing.

22. Method according to claim 8,
**characterized in that** the fibers (9) are deposited on a carrier (91), that the carrier (91) is put onto at least one cover sheet (1; 2) and that the fibers (9) are then adhered to the at least one cover sheet (1; 2).

23. Method according to claim 22,
**characterized in that** the carrier (91) is removed after adhering the fibers to one of the cover sheets (1, 2).

24. Method according to claim 8 or 9,
**characterized in that** the fibers (9) are aligned by means of an electric and/or magnetic field.

25. Arrangement according to claim 1,
in which additionally to the fibers (9) spherical, parallelepiped or similarly formed bodies are used.

26. Method according to claim 8,
in which additionally to the fibers (9) spherical, parallelepiped or similarly formed bodies are used.

## Revendications

1. Dispositif de production d'un matériau composite comprenant au moins une première et au moins une deuxième couches extérieures (1, 2) entre lesquelles se trouve une couche centrale (30) qui présente une composition à base de fibres (9) et d'adhésif (5), avec:
- au moins un système d'alimentation (3; 6) pour lesdites au moins une première et au moins une deuxième couches extérieures (1, 2);
- un premier poste (4, 7; 8) pour réaliser la couche centrale (30), qui présente au moins un premier et au moins un deuxième équipements (4, 7) pour déposer l'adhésif (5) sur lesdites au moins une première et au moins une deuxième couches extérieures (1, 2), ainsi qu'au moins un équipement de flocage (8) pour déposer les fibres (9) sur les zones revêtues de l'adhésif (5) de l'une au moins des couches extérieures (1, 2);
- des propriétés physiques localement différentes du matériau composite pouvant être obtenues par le fait que le premier et/ou le deuxième équipement (4, 7) est prévu pour déposer l'adhésif (5) sur certaines zones des couches extérieures (1, 2) et/ou que l'équipement de flocage (8) est prévu pour déposer les fibres (9) avec des différences de type et/ou densité et/ou épaisseur et/ou longueur et/ou matière et/ou orientation par rapport aux couches extérieures ;
- au moins un deuxième poste (12) pour assembler les couches extérieures (1, 2) et pour durcir l'adhésif (5) ; ainsi que
- un équipement convoyeur (121', 121"; 122', 122") au moyen duquel les couches extérieures (1, 2) alimentées peuvent être transportées dans le dispositif de manière au moins en grande partie continue.

2. Dispositif de production d'un matériau composite comprenant au moins une première et au moins une deuxième couches extérieures (1, 2) entre lesquelles se trouve une couche centrale (30) qui présente une composition à base de fibres (9) et d'adhésif (5), avec:
- au moins un système d'alimentation (3; 6) pour lesdites au moins une première et au moins une deuxième couches extérieures (1, 2);
- un premier poste (4, 7; 8) pour réaliser la couche centrale (30), qui est prévu pour déposer un mélange de fibres (9) et d'adhésif (5) sur l'une au moins des couches extérieures (1, 2) de telle manière que le mélange est seulement déposé localement sur certaines zones des couches extérieures (1, 2), ces zones ayant la forme d'un motif avec des creux ou des canaux qui restent exempts de mélange ou la forme d'une couche non continue avec des îlots du mélange de façon à éviter au moins en grande partie les contraintes propres dues aux différences de coefficient de dilatation thermique des couches extérieures (1, 2),
- au moins un deuxième poste (12) pour assembler les couches extérieures (1, 2) et pour durcir l'adhésif (5); ainsi que
- un équipement convoyeur (121', 121"; 122', 122") au moyen duquel les couches extérieures (1, 2) alimentées peuvent être transportées dans le dispositif de manière au moins pratiquement continue.

3. Dispositif selon la revendication 1 ou la revendication 2,
**caractérisé en ce que** l'un au moins des équipements (4, 7) prévus pour déposer l'adhésif (5) ou pour déposer le mélange de fibres (9) et d'adhésif (5) présente un tamis (47, 77) qui laisse passer l'adhésif (5) ou le mélange de fibres (9) et d'adhésif (5) au moins dans des zones partielles et au travers duquel l'adhésif (5) ou le mélange de fibres (9) et adhésif (5) peut être déposé sur l'une au moins des couches extérieures (1, 2).

4. Dispositif selon la revendication 3,
**caractérisé en ce que** le tamis est réalisé sous la forme d'une bande (41), guidée autour d'une pluralité de rouleaux (42, 43, 44), qui repose par un de ses segments sur la couche extérieure (1, 2) et qui est entraînée par l'avance de cette dernière.

5. Dispositif selon la revendication 1 ou la revendication 2,
**caractérisé en ce que** l'un au moins des équipements (4, 7) pour déposer l'adhésif (5) ou le mélange de fibres (9) ainsi que l'adhésif (5) est formé par un système de pulvérisation comprenant une pluralité de buses de pulvérisation activables et/ou orientables.

6. Dispositif selon la revendication 1,
**caractérisé en ce que** l'équipement de flocage (8) comprend au moins un réservoir (81) muni d'un fond qui laisse passer les fibres (9) ainsi que d'au moins un dispositif vibrant au moyen duquel l'un au moins des réservoirs (81) peut être soumis à des vibrations afin d'augmenter ou moduler la quantité de fibres (9) qui passent à travers le fond.

7. Dispositif selon la revendication 1,
**caractérisé en ce que** l'équipement de flocage (8) comprend au moins un réservoir (81) muni d'un fond qui laisse passer les fibres (9) ainsi qu'au moins un moyen pour générer un champ électrique et/ou magnétique (82) entre ledit au moins un réservoir (81) et ladite au moins une première couche extérieure (1) de façon à accélérer les fibres (9) qui passent à travers le fond en direction de ladite au moins une première couche extérieure (1), l'intensité du champ électrique et/ou magnétique (82) pouvant être modifiée afin de modifier ou moduler la quantité de fibres (9) arrivant sur ladite au moins une première couche extérieure (1).

8. Procédé de production d'un matériau composite comprenant au moins une première et au moins une deuxième couches extérieures (1, 2) entre lesquelles se trouve une couche centrale (30) qui présente une composition à base de fibres (9) et d'adhésif (5), **caractérisé par** les étapes suivantes, dont l'une au moins s'effectue selon un mode de fonctionnement continu au moins en grande partie:
(a1) dépôt de l'adhésif (5) sur lesdites au moins une première et au moins une deuxième couches extérieures (1, 2);
(b1) dépôt des fibres (9) sur les zones revêtues de l'adhésif (5) de l'une au moins des couches extérieures (1, 2), des propriétés physiques localement différentes du matériau composite étant obtenues en déposant l'adhésif (5) sur certaines zones des couches extérieures (1, 2) et/ou en déposant les fibres (9) avec des différences de type et/ou densité et/ou épaisseur et/ou longueur et/ou matière et/ou orientation par rapport aux couches extérieures; et
(c1) assemblage des couches extérieures (1, 2) et durcissement de l'adhésif (5).

9. Procédé de production d'un matériau composite comprenant au moins une première et au moins une deuxième couches extérieures (1, 2) entre lesquelles se trouve une couche centrale (30) qui présente une composition à base de fibres (9) et d'adhésif (5), **caractérisé par** les étapes suivantes, dont l'une au moins s'effectue selon un mode de fonctionnement continu au moins en grande partie:
(a2) dépôt d'un mélange de fibres (9) et d'adhésif (5) sur l'une au moins des couches extérieures (1, 2) de telle manière que le mélange est seulement déposé localement sur certaines zones des couches extérieures (1, 2), ces zones ayant la forme d'un motif avec des creux ou des canaux qui restent exempts de mélange ou la forme d'une couche non continue avec des îlots du mélange de façon à éviter au moins en grande partie les contraintes propres dues aux différences de coefficient de dilatation thermique des couches extérieures (1, 2), et
(b2) assemblage des couches extérieures (1, 2) et durcissement de l'adhésif (5).

10. Procédé selon la revendication 8 ou la revendication 9,
**caractérisé en ce que** l'étape (a1) ou (a2) s'effectue en utilisant un procédé analogue à la sérigraphie.

11. Procédé selon la revendication 8 ou la revendication 9,
**caractérisé en ce que** l'adhésif (5) ou le mélange de fibres (9) et adhésif (5) est déposé par pulvérisation.

12. Procédé selon la revendication 8 ou la revendication 9,
**caractérisé en ce que** l'adhésif (5) ou le mélange de fibres (9) et d'adhésif (5) est déposé essentiellement sous la forme de points.

13. Procédé selon la revendication 8,
**caractérisé en ce que** l'adhésif (5) est déposé en une couche non continue afin notamment d'éviter au moins en grande partie les contraintes propres dues aux différences de coefficient de dilatation thermique des couches extérieures (1, 2).

14. Procédé selon la revendication 8 ou la revendication 9,
**caractérisé en ce que** les étapes (a1) et/ou (b1) ou (a2) s'effectuent de telle manière que le matériau composite reste exempt d'adhésif (5) et/ou de fibres (9) ou du mélange de fibres (9) et d'adhésif (5) au moins dans une zone dans laquelle ledit matériau peut être transformé par la suite par soudage, découpe, pliage, cintrage ou une opération similaire.

15. Procédé selon la revendication 8 ou la revendication 9,
**caractérisé en ce que** les étapes (a1) et/ou (b1) ou (a2) s'effectuent de telle manière que l'adhésif (5) et les fibres (9) ou le mélange de fibres (9) et d'adhésif (5) délimitent entre les couches extérieures (1, 2) des zones aptes à conduire des milieux liquides ou gazeux ou à recevoir des objets.

16. Procédé selon la revendication 15,
**caractérisé en ce que** les milieux liquides ou gazeux ou les objets sont introduits dans lesdites zones après les étapes (a1) et/ou (b1) ou (a2) et avant ou après le durcissement de l'adhésif (5).

17. Procédé selon la revendication 8,
**caractérisé en ce que**, avant le dépôt des fibres (9), l'adhésif (5) est chauffé afin de lui conférer une viscosité appropriée pour la pénétration des fibres (9).

18. Procédé selon la revendication 8 ou la revendication 9,
**caractérisé en ce que** les fibres (9) sont un mélange de fibres métalliques et non métalliques.

19. Procédé selon la revendication 8,
**caractérisé en ce que** les fibres (9) sont déposées sous la forme d'un motif positif/négatif sur les couches extérieures (1, 2).

20. Procédé selon la revendication 8,
**caractérisé en ce que**, pendant ou tout de suite après le dépôt des fibres (9), un courant d'air stable ou tourbillonné est dirigé sur les fibres (9) afin d'obtenir une orientation non perpendiculaire et non ordonnée des fibres (9).

21. Procédé selon la revendication 8 ou la revendication 9,
**caractérisé en ce que**, pour durcir l'adhésif (5) ou le mélange de fibres (9) et d'adhésif (5), il est prévu au moins deux étages servant au prédurcissement et au durcissement final.

22. Procédé selon la revendication 8,
**caractérisé en ce que** les fibres (9) sont déposées sur un substrat (91), le substrat (91) est posé sur au moins une couche extérieure (1, 2) et les fibres (9) sont ensuite collées à ladite au moins une couche extérieure (1, 2).

23. Procédé selon la revendication 22,
**caractérisé en ce que** le substrat (91) est enlevé après le collage des fibres (9) à l'une des couches extérieures (1, 2).

24. Procédé selon la revendication 8 ou la revendication 9,
**caractérisé en ce que** les fibres (9) sont orientées au moyen d'un champ électrique et/ou magnétique.

25. Dispositif selon la revendication 1,
dans lequel des corps de forme sphérique, parallélépipédique ou similaire sont utilisés en plus des fibres (9).

26. Procédé selon la revendication 8,
dans lequel des corps de forme sphérique, parallélépipédique ou similaire sont utilisés en plus des fibres (9).
